Europäisches Patentamt

European Patent Office

Office européen des brevets

(19)

(11) Numéro de publication: **0 187 776**
**B1**

(12) **FASCICULE DE BREVET EUROPEEN**

(45) Date de publication du fascicule du brevet:
**30.03.88**

(21) Numéro de dépôt: **85903015.7**

(22) Date de dépôt: **24.06.85**

(86) Numéro de dépôt international:
**PCT/FR 85/00172**

(87) Numéro de publication internationale:
**WO 86/00853 (13.02.86 Gazette 86/4)**

(51) Int. Cl.⁴: **B 60 C 9/00,** D 03 D 1/00,
D 03 D 11/00

(54) **NAPPE DE RENFORT CONSTITUEE AU MOINS EN PARTIE PAR UN TISSU TRIDIMENSIONNEL DONT LA SECTION A UNE LARGEUR VARIABLE; ARTICLES COMPORTANT AU MOINS UNE TELLE NAPPE; PROCEDES PERMETTANT D'OBTENIR CES ARTICLES.**

(30) Priorité: **19.07.84 FR 8411749**

(43) Date de publication de la demande:
**23.07.86 Bulletin 86/30**

(45) Mention de la délivrance du brevet:
**30.03.88 Bulletin 88/13**

(84) Etats contractants désignés:
**AT BE CH DE FR GB IT LI LU NL SE**

(56) Documents cités:
**EP - A - 0 107 125**
**EP - A - 0 131 855**
**FR - A - 513 957**
**FR - A - 1 453 467**
**FR - A - 2 540 792**

(73) Titulaire: **MICHELIN & CIE (Compagnie Générale des Etablissements Michelin) Société dite:, 4 rue du Terrail, F-63000 Clermont-Ferrand (FR)**

(72) Inventeur: **MERLE, Michel, Marktgasse 17, CH-Dübendorf 8600 (CH)**

(74) Mandataire: **Doussaint, Jean-Marie et al, MICHELIN & CIE Service K. Brevets, F-63040 Clermont-Ferrand Cedex (FR)**

ACTORUM AG

## Description

L'invention concerne les articles renforcés. L'invention concerne plus particulièrement les articles comportant des armatures, dites «armatures de renfort», destinées à rigidifier une ou plusieurs parties de ces articles, ces armatures étant constituées chacune d'au moins une nappe dite «nappe de renfort». De tels articles peuvent être par exemple des courroies, des tuyaux, des bandes transporteuses, des enveloppes de pneumatiques.

L'invention concerne notamment les enveloppes de pneumatiques comportant une armature de renfort destinée à rigidifier leur sommet pour permettre à ce sommet de supporter les contraintes dues au roulage. Cette armature est appelée «armature de sommet» dans la suite de cet exposé.

Chaque nappe de renfort connue a en général une structure pratiquement bidimensionnelle, sous forme par exemple d'un ensemble de câbles de renfort disposés sur une seule épaisseur.

De telles nappes peuvent être utilisées telles quelles lors de la réalisation d'enveloppes de pneumatiques par confection sur un tambour ou par coulée dans un moule, comme décrit par exemple dans la demande de brevet japonais publiée après examen sous le N° 57-12 687 ou dans la demande de brevet européen publiée sous le N° 5423. Dans ces procédés, on ne dispose pas ces nappes directement sur la surface d'un tambour ou d'un moule, car les enveloppes auraient dans ce cas une fragilité excessive lors du roulage.

D'autre part, pour conférer aux enveloppes de pneumatiques les caractéristiques mécaniques nécessaires, il est indispensable de disposer ces nappes à un niveau déterminé dans l'épaisseur du sommet. On est donc conduit à disposer ces nappes sur une matière que l'on a placée au préalable sur la surface du tambour ou du moule pour que ces nappes soient protégées par une épaisseur notable de matière dans les enveloppes terminées.

Ces techniques conduisent à des opérations complexes et/ou coûteuses qui provoquent des variations de qualité d'une enveloppe à l'autre au cours d'une fabrication.

Il a été proposé dans la DE-A-28 30 331 de munir ces nappes d'ergots et de disposer ensuite ces nappes dans un moule de telle sorte que les ergots s'appuient sur la surface du noyau du moule. On vise ainsi à enrober les nappes de tous les côtés par la matière coulée. Le nombre de ces ergots est nécessairement limité, d'où la formation de zones de contact peu nombreuses et de sections individuelles importantes. Il s'ensuit des discontinuités notables à l'intérieur de l'enveloppe et des risques de collage défectueux. D'autre part, des ergots détruisent la symétrie de révolution, à l'intérieur de l'enveloppe et les nappes prennent une forme pratiquement prismatique.

Tous ces inconvénients subsistent même si la matière qui forme les ergots et la matière coulée sont analogues ou identiques et ces inconvénients sont la source de phénomènes vibratoires qui sont nuisibles à la fois au confort et à la durée de vie de l'enveloppe.

La demande de brevet FR 2 421 969 décrit un tissu de structure tridimensionnelle comportant deux groupes de fils de chaîne: les fils de chaîne d'un premier groupe sont distribués pour constituer le corps du tissu, tandis que les fils de chaîne du second groupe sont distribués pour former au moins une nappe tissée séparatrice. Ce tissu permet ainsi de constituer un dispositif de liaison à deux matériaux de natures différentes, sans pour cela que les produits en question se trouvent au contact, du fait de la présence de la nappe séparatrice. Un tel tissu n'est pas adapté à la réalisation d'armatures de renfort pour enveloppe de pneumatique.

La demande de brevet français N° 83-02625 (correspondant au document EP-A-0118745, publié le 19.9.84 et cité selon Article 54(3) de la CBE) décrit une nappe de renfort destinée à être utilisée dans un article, ladite nappe étant constituée au moins en partie par un tissu dont les propriétés sont les suivantes:

a) il comporte un corps tridimensionnel et des fils de renfort disposés dans ce corps et maintenus par ce corps;

b) pratiquement tous les vides du tissu sont susceptibles d'être remplis par au moins une matière entrant dans la constitution de l'enveloppe;

c) le tissu comporte deux faces principales réunies par deux faces latérales;

d) lorsque le tissu est disposé de façon à avoir une forme générale plane, les faces principales sont pratiquement planes et parallèles.

Cette nappe garantit un positionnement précis dans l'espace des fils de renfort, à l'intérieur de l'enveloppe, ce qui permet la réalisation d'enveloppes ayant une qualité de fabrication très régulière, pratiquement sans risque de détérioration due à des déplacements de ces fils de renfort en cours de fabrication. Il peut cependant arriver que les faces latérales de cette nappe comportent une densité de fils excessive limitant éventuellement la perméabilité de ces faces dans une direction perpendiculaire à ces faces. Il peut aussi arriver que ces faces latérales soient disposées dans des zones à contraintes élevées, ce qui peut provoquer des détériorations de l'enveloppe dans ces zones, au contact de ces faces.

Le but de l'invention est d'éviter ces inconvénients.

En conséquence, la nappe de renfort conforme à l'invention, destinée à être utilisée dans un article, est constituée au moins en partie par un tissu dont les propriétés sont les suivantes:

a) il comporte un corps tridimensionnel et des fils de renfort disposés dans ce corps et maintenus par ce corps;

b) pratiquement tous les vides du tissu sont susceptibles d'être remplis par au moins une matière entrant dans la constitution de l'article;

c) le tissu comporte deux faces principales réunies par deux faces latérales;

d) lorsque le tissu est disposé de façon à avoir une forme générale plane, les faces principales sont pratiquement planes et parallèles;

e) tout plan sectionnant les faces principales et latérales du tissu forme une section dont la largeur, mesurée parallèlement aux faces principales, varie d'une face principale à l'autre.

L'invention concerne également les nappes ainsi définies imprégnées d'au moins une matière entrant dans la constitution des articles qu'elles sont destinées à renforcer. L'invention concerne également les articles comportant au moins une nappe de renfort conforme à l'invention, ainsi que les procédés permettant d'obtenir ces articles. La description qui suit concerne plus particulièrement les enveloppes de pneumatiques, mais les articles conformes à l'invention peuvent être autres que des enveloppes de pneumatiques, par exemple des courroies, des tuyaux, des bandes transporteuses.

Les exemples de réalisation qui suivent ainsi que les figures toutes schématiques du dessin correspondant à ces exemples sont destinés à illustrer l'invention et à en faciliter la compréhension sans toutefois en limiter la portée.

Sur le dessin:
— la figure 1 représente en coupe radiale une enveloppe de pneumatique avec une armature de sommet constituée par deux nappes de renfort conformes à l'invention;
— la figure 2 représente, vue de dessus, une partie de l'armature de sommet de l'enveloppe représentée à la figure 1;
— la figure 3 représente, vue de dessus, une portion de la nappe inférieure de l'armature de sommet représentée aux figures 1 et 2, cette nappe étant constituée par un tissu avec un corps tridimensionnel;
— la figure 4 représente en coupe la nappe inférieure représentée en partie à la figure 3, cette coupe étant effectuée selon la ligne IV-IV de la figure 3;
— la figure 5 représente en coupe une portion de la nappe inférieure représentée aux figures 3 et 4, cette coupe étant effectuée dans la région centrale de la nappe, selon les lignes V-V des figures 3 et 4;
— la figure 6 représente en coupe une portion de la nappe inférieure représentée aux figures 3 et 4, cette coupe étant effectuée dans une région latérale de la nappe, selon les lignes VI-VI des figures 3 et 4;
— la figure 7 représente en coupe radiale une partie d'un moule utilisé pour la réalisation de l'enveloppe représentée à la figure 1;
— la figure 8 représente en coupe radiale une enveloppe de pneumatique avec une armature de sommet constituée par une autre nappe de renfort conforme à l'invention;
— la figure 9 représente, vue de dessus, une portion de la nappe de renfort représentée à la figure 8;
— la figure 10 représente en coupe la nappe représentée en partie à la figure 9, cette coupe étant effectuée selon ligne X-X de la figure 9;
— la figure 11 représente en coupe une portion de la nappe représentée aux figures 9 et 10, cette coupe étant effectuée dans la région centrale de la nappe, selon les lignes XI-XI des figures 9 et 10;
— la figure 12 représente en coupe une portion de la nappe représentée aux figures 9, 10, cette coupe étant effectuée dans une région latérale de la nappe, selon les lignes XII-XII des figures 9 et 10;
— la figure 13 représente, vue de profil, une bande de tissu à partir de laquelle plusieurs nappes conformes à l'invention peuvent être préparées par découpage;
— les figures 14, 15 représentent chacune en coupe une autre nappe conforme à l'invention;
— les figures 16, 17 représentent chacune en coupe radiale une portion du sommet d'une enveloppe de pneumatique comportant une autre nappe de renfort conforme à l'invention;
— la figure 18 représente un fil de renfort ondulé utilisable dans une nappe de renfort conforme à l'invention.

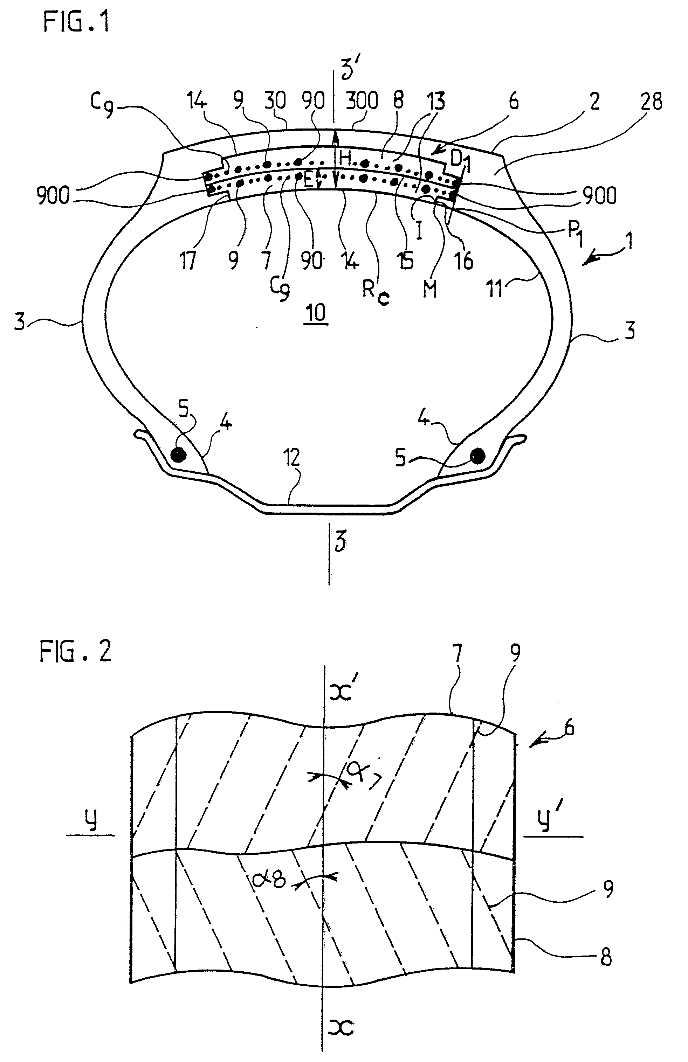

On voit à la figure 1 une enveloppe de pneumatique 1. Cette enveloppe 1 comporte un sommet 2, deux flancs 3, deux bourrelets 4, chaque bourrelet étant par exemple renforcé avec une tringle 5.

Le sommet 2 comporte une armature de renfort 6 constituée par deux nappes 7, 8 superposées, parfois appelées «nappes de travail» dans l'industrie des pneumatiques, chacune de ces nappes 7, 8 étant conforme à l'invention.

La figure 2 représente, vue de dessus, une partie de ces nappes 7, 8, toute la partie du sommet 2 située au-dessus de ces nappes étant supposée enlevée. Chacune des nappes 7, 8 comporte des fils de renfort 9 parallèles entre eux, l'orientation des fils 9 d'une nappe étant croisée avec celle des fils de renfort 9 de l'autre nappe. Pour la clarté du dessin, à la figure 2, les fils de renfort 9 ont été représentés par des droites pointillées et les autres éléments entrant dans la composition des nappes 7, 8 n'ont pas été représentés, ces éléments étant décrits plus en détail ultérieurement. Les fils 9 de la nappe 7 font l'angle aigu $\alpha_7$ avec le plan équatorial de l'enveloppe 1, ce plan équatorial étant le plan perpendiculaire à l'axe de révolution de l'enveloppe 1, et passant par le milieu du sommet 2. A la figure 2, ce plan équatorial est schématisé par la ligne xx' et l'axe de révolution de l'enveloppe 1 est schématisé par la ligne yy', le plan équatorial étant schématisé par la ligne zz' à la figure 1. Les fils 9 de la nappe 8 font l'angle aigu $\alpha_8$ avec le plan équatorial xx' (figure 2). Ces angles $\alpha_7$, $\alpha_8$ sont disposés de part et d'autre du plan équatorial xx', chacun de ces angles étant par exemple compris entre 15° et 30°. Pour la clarté du dessin, les fils de renfort 9 ont été représentés dans chaque nappe 7, 8 plus écartés qu'ils ne le sont en réalité.

La nappe 7 est située sous la nappe 8, c'est-à-dire que cette nappe 7 est plus proche que la nappe 8 de la cavité interne 10 de l'enveloppe, cette cavité étant définie par la face interne 11 de l'enveloppe et la jante 12 sur laquelle est montée l'enveloppe, cette enveloppe étant alors gonflée à sa pression d'utilisation normale et non chargée.

En d'autres termes, la distance radiale de la nappe 8 est supérieure à la distance radiale de la nappe 7, ces distances radiales, non représentées sur le dessin dans un but de simplification, étant, par définition, mesurées par rapport à l'axe de révolution yy' et dans le plan équatorial. La nappe 7 est dite «nappe inférieure» et la nappe 8 est dite «nappe supérieure».

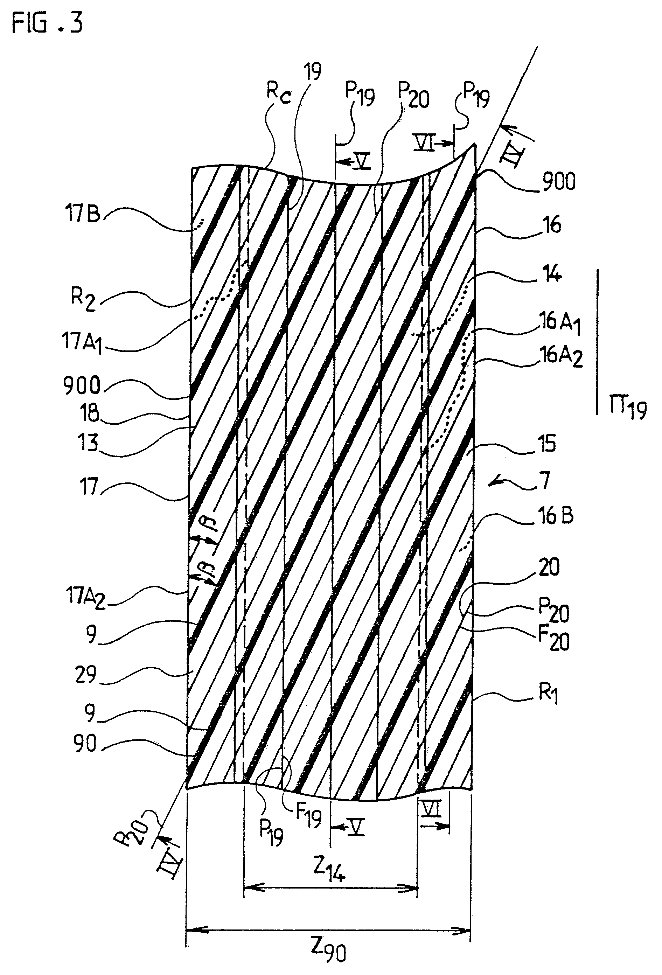

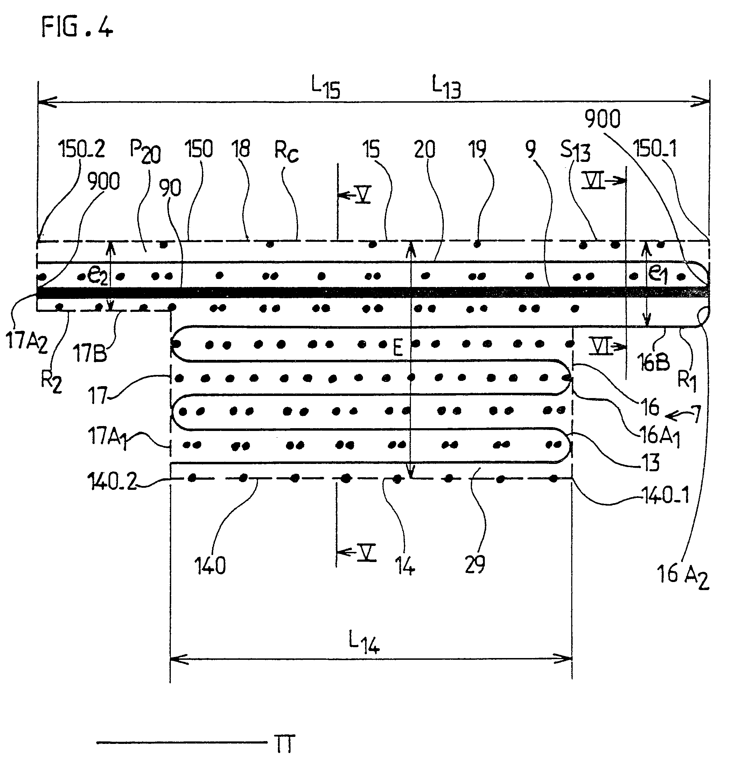

Les figures 3, 4, 5, 6 représentent chacune une portion de la nappe inférieure 7, la figure 3 étant une vue de dessus de cette portion et les figures 4, 5, 6 étant des coupes de cette portion. Cette nappe 7 est constituée par un tissu 13 avec deux faces principales 14, 15. Ces faces 14, 15 sont réunies par deux faces latérales 16, 17, ces faces 14, 15, 16, 17 pouvant être représentées en totalité ou en partie sous forme de segments de droites pointillés aux figures 3, 4, 5, 6. Les faces principales 14, 15 sont pratiquement planes et parallèles, c'est-à-dire que le tissu 13 est représenté sur les figures 3 à 6 avant son utilisation dans le sommet 2, le tissu 13 étant alors supposé disposé de façon à avoir une forme générale plane, la face 15 étant la face supérieure de ce tissu, la face 14 étant la face inférieure de ce tissu.

Le terme «face principale» employé dans un but de simplification ne veut pas dire que l'aire des faces principales 14, 15 soit nécessairement supérieure à l'aire des faces latérales 16, 17. On peut en effet envisager des cas de réalisation où l'aire des faces principales 14, 15 est égale ou inférieure à l'aire des faces latérales 16, 17, mais dans les cas les plus courants l'aire des faces principales 14, 15 est supérieure à l'aire des faces latérales 16, 17.

La figure 4 est une coupe selon un plan sectionnant les faces principales 14, 15 et les faces latérales 16, 17 du tissu 13. Ce plan est perpendiculaire aux faces principales 14, 15, ce plan étant schématisé par la ligne droite IV-IV à la figure 3. Ce plan forme une section $S_{13}$ représentée à la figure 4. Conformément à l'invention, la largeur de cette section varie d'une face principale à l'autre, cette largeur étant mesurée parallèlement aux faces principales 14, 15. La largeur maximum de cette section $S_{13}$ est référencée $L_{13}$ sur cette figure 4, cette largeur $L_{13}$ étant la plus grande dimension de la section $S_{13}$ lorsque cette dimension est mesurée parallèlement aux faces principales 14, 15.

Sur cette figure 4, l'intersection du plan de cette figure avec la face principale inférieure 14 forme une trace 140 et l'intersection de ce plan avec la face supérieure 15 forme une trace 150, ces traces représentées en pointillés étant pratiquement rectilignes. La trace 140 rejoint la face latérale 16 par son extrémité 140-1 et la face latérale 17 par son extrémité 140-2 et de façon analogue la trace 150 rejoint la face latérale 16 par son extrémité 150-1 et la face latérale 17 par son extrémité 150-2. Par définition, la longueur $L_{14}$ de la trace 140 est la distance qui sépare les extrémités 140-1, 140-2 de cette trace 140 et la longueur $L_{15}$ de la trace 150 est la distance qui sépare les extrémités 150-1, 150-2 de cette trace 150. Dans le cas de l'exemple décrit à la figure 4, la longueur $L_{14}$ de la trace 140 correspondant à la face inférieure 14 représente la largeur minimum de la section $S_{13}$. Cette longueur $L_{14}$ est inférieure à la largeur $L_{13}$, tandis que la longueur $L_{15}$ de la trace 150 correspondant à la face supérieure 15 est égale à la largeur $L_{13}$. La face principale 14 est dite «face étroite». Les conclusions seraient les mêmes pour tout plan sectionnant les faces 14, 15, 16, 17.

La face latérale 16 est constituée par trois faces élémentaires $16A_1$, $16A_2$, $16B$, les faces élémentaires $16A_1$, $16A_2$ étant parallèles entre elles et réunies par la face élémentaire $16B$. Les faces élémentaires $16A_1$, $16A_2$ sont perpendiculaires aux faces principales 14, 15, la face élémentaire $16A_1$ étant reliée à la face inférieure étroite 14 et la face élémentaire $16A_2$ étant reliée à la face supérieure 15. La face élémentaire $16B$ est parallèle aux faces principales 14, 15. La face latérale 17 est constituée, de façon analogue à la face latérale 16, par trois faces élémentaires $17A_1$, $17A_2$, $17B$, les faces élémentaires $17A_1$, $17A_2$ étant parallèles entre elles et réunies par la face élémentaire $17B$. Les faces élémentaires $17A_1$, $17A_2$ sont perpendiculaires aux faces principales 14, 15, la face élémentaire $17A_1$ étant reliée à la face inférieure 14 et la face élémentaire $17A_2$ étant reliée à la face supérieure 15. La face élémentaire $17B$ est parallèle aux faces principales 14, 15. Les faces élémentaires $16A_1$, $16A_2$ sont parallèles aux faces élémentaires $17A_1$, $17A_2$ et orientées selon la longueur du tissu 13.

Le volume de la nappe 7 délimité par les faces 15, $16A_2$, $16B$ et le prolongement de la face $16A_1$ constitue une région latérale $R_1$ d'épaisseur $e_1$, mesurée entre les faces 15 et $16B$. Le volume de la nappe 7 délimité par les faces 15, $17A_2$, $17B$ et le prolongement de la face $17A_1$ constitue une région latérale $R_2$ d'épaisseur $e_2$, mesurée entre les faces 15 et $17B$. Dans l'exemple décrit, les épaisseurs $e_1$ et $e_2$ ont pratiquement la même valeur. Le volume de la nappe 7 délimité par les faces 14, 15 et par les faces $16A_1$, $17A_2$ et leurs prolongements constitue une région centrale R d'épaisseur E, mesurée entre les faces principales 14, 15, la valeur de l'épaisseur E étant supérieure à celle des épaisseurs $e_1$, $e_2$, cette région centrale étant donc la région de la nappe 7 où l'épaisseur est maximum. Les épaisseurs E, $e_1$, $e_2$ sont mesurées selon des droites perpendiculaires à un plan quelconque qui est parallèle aux faces principales 14, 15, un tel plan $\pi$ est schématisé par une ligne droite à la figure 4.

Le tissu 13 comporte un corps tridimensionnel 18. Les fils de renfort 9 de la nappe 7 sont disposés dans le corps 18 et maintenus par ce corps. Le corps 18 est un corps tissé constitué par les fils de chaîne 19 et par des fils de trame 20. Le terme «fil» doit être pris dans un sens très général, c'est-à-dire que chacun des fils 9, 19, 20 peut être constitué par exemple soit par un seul fil unitaire, soit par un assemblage de plusieurs fils unitaires formant par exemple un câble, chaque fil unitaire pouvant être éventuellement constitué soit par un filament unique, soit par plusieurs filaments. Chacun de ces fils 9, 19, 20 peut aussi être constitué par exemple par un assemblage de fibres courtes ou par un ou plusieurs rubans.

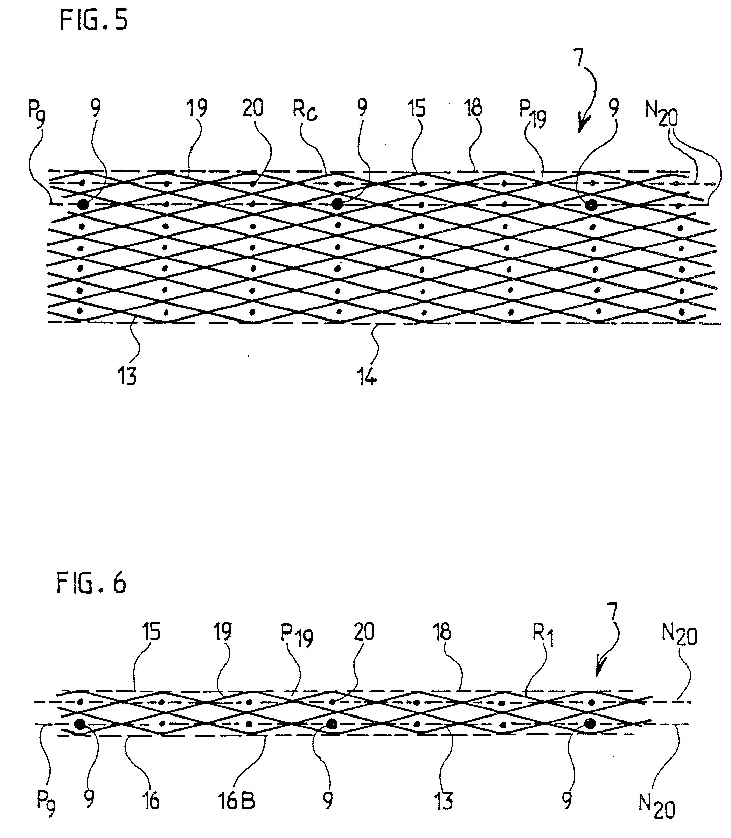

Sur la figure 3, les fils 9, 19, 20 sont représentés par des lignes continues. Sur la figure 4, les fils 9, 20 sont représentés par des lignes continues et les fils de chaîne 19 sont représentés en coupe transversale. Sur les figures 5, 6 les fils 9, 20 sont représentés en coupe transversale et les fils de chaîne 19 sont représentés par des lignes continues.

La figure 5 est une coupe de la portion de nappe inférieure 7, cette coupe étant effectuée dans le région centrale $R_c$ de cette portion selon un plan perpendiculaire aux faces principales 14, 15 et parallèle aux faces élémentaires $16A_1$, $16A_2$, $17A_1$, $17A_2$.

La figure 6 est une coupe de la portion de nappe inférieure 7, cette coupe étant effectuée dans la région latérale $R_1$ de cette portion, selon un plan perpendiculaire à la face principale 15 et à la face élémentaire 16B, le plan de la figure 6 étant parallèle aux faces élémentaires $16A_1$, $16A_2$, $17A_1$, $17A_2$. Sur les figures 3 et 4, le plan de coupe de la figure 5 est schématisé par la ligne droite V-V et le plan de coupe de la figure 6 est schématisé par la ligne droite VI-VI.

On voit sur la figure 5 que chaque fil de chaîne 19 ondule entre les faces principales 14, 15 en étant alternativement tangent à une de ces faces puis à l'autre.

On voit sur la figure 6 que chaque fil de chaîne 19 ondule entre la face principale supérieure 15 et la face élémentaire 16B en étant alternativement tangent à une de ces faces puis à l'autre. Chaque fil de chaîne 19 ondule pratiquement dans un plan $P_{19}$ dit «plan de chaîne», ces plans étant perpendiculaires aux faces principales 14, 15 dans la zone centrale $R_c$ et perpendiculaires à la face principale 15 et aux faces élémentaires 16B ou 17B dans les régions latérales $R_1$, $R_2$, ces plans $P_{19}$ étant parallèles entre eux et aux faces élémentaires $16A_1$, $16A_2$, $17A_1$, $17A_2$, c'est-à-dire qu'ils sont parallèles à un plan quelconque perpendiculaire aux faces principales 14, 15 et parallèle à la longueur de la nappe 7, un tel plan $\pi_{19}$ est schématisé par une ligne droite à la figure 3. Les plans des figures 5, 6 sont par exemple des plans de chaîne $P_{19}$. A la figure 3, ces plans de chaîne $P_{19}$ sont représentés par les mêmes lignes continues que les fils de chaîne 19. La direction moyenne $F_{19}$ des fils de chaîne 19 correspond à l'intersection des plans $P_{19}$ avec la face principale supérieure 15 (figure 3).

Les fils de trame 20 ondulent pratiquement dans une série de plans $P_{20}$ dits «plans de trame» parallèles entre eux et perpendiculaires aux faces principales 14, 15. Ces plans $P_{20}$ font avec les faces élémentaires $17A_1$, $17A_2$ un angle aigu $\beta$ compris entre 0 et 90°, le plan de coupe de la figure 4 étant par exemple un plan de trame $P_{20}$. Ces plans $P_{20}$ sont représentés par les mêmes lignes continues que les fils de trame 20 à la figure 3.

Dans chaque plan $P_{20}$, un fil de trame 20 ondule entre les fils de chaîne 19 en étant tangent à une face élémentaire $16A_1$ ou $16A_2$ de la face latérale 16 puis à une autre face élémentaire $17A_1$ ou $17A_2$ de la face latérale 17. La direction moyenne $F_{20}$ des fils de trame 20 est l'intersection des plans $P_{20}$ avec la face principale 15 (figure 3).

Les fils de trame 20 entre les faces latérales 16, 17 sont par exemple pratiquement rectilignes et parallèles aux faces principales 14, 15 et dans chaque plan $P_{20}$ ils se déplacent en ondulant d'une face principale à l'autre, par exemple de la face 14 vers la face 15, puis ils passent dans un autre plan adjacent $P_{20}$ et ils se déplacent en sens inverse, en ondulant, de la face 15 vers la face 14, et ainsi de suite. Les faces principales 14, 15 et les faces élémentaires 16B, 17B, parallèles aux faces principales 14, 15, sont délimitées par des fils de chaîne 19.

Sur les coupes des figures 5, 6 on constate que les fils de trame 20 sont pratiquement disposés sur plusieurs surfaces $N_{20}$, de préférence au moins quatre dans la région centrale (figure 5) et au moins deux dans les régions latérales $R_1$, $R_2$ (figure 6). Lorsque les fils de trame 20 sont pratiquement rectilignes et parallèles aux faces principales 14, 15, ces surfaces $N_{20}$ correspondent à des plans parallèles aux faces principales 14, 15, deux tels plans $N_{20}$ sont représentés en pointillés aux figures 5, 6. Le nombre de plans $N_{20}$ est par exemple de 7 pour la région centrale $R_c$ et de 2 pour les régions latérales $R_1$, $R_2$. Les fils de renfort 9 sont formés dans le tissu 13 par des fils de trame disposés pratiquement dans un plan $P_9$ parallèle aux faces principales 14, 15 et situé par exemple à proximité de la face supérieure 15 en traversant les régions latérales $R_1$, $R_2$. Ce plan $P_9$ qui est représenté en pointillés aux figures 5, 6 est confondu avec un plan $N_{20}$. Les fils de renfort 9 sont dépourvues de contact avec les faces principales 14, 15 et ils sont parallèles aux plans $P_{20}$, c'est-à-dire qu'ils forment l'angle $\beta$ avec la face $17A_2$ et chacun de ces fils 9 s'étend d'une face élémentaire $16A_2$, $17A_2$ à l'autre face élémentaire $17A_2$, $16A_2$, c'est-à-dire qu'il traverse les régions latérales $R_1$, $R_2$. L'ensemble des fils de renfort 9 de la nappe 7 forme un ensemble renforçant 90 dont chaque extrémité latérale 900 est constituée par la ligne joignant les extrémités voisines des fils de renfort 9, chaque ligne 900 étant par exemple située sur une face élémentaire $16A_2$, $17A_2$.

Les fils de renfort 9 sont séparés les uns des autres par des fils 19, 20 du corps, de telle sorte que ces fils de renfort 9 soient dépourvus de contact entre eux. On limite ainsi les phénomènes d'abrasion de ces fils 9 entre eux.

La structure du corps 18 est donc tridimensionnelle puisque les fils 19, 20 qui le constituent sont distribués dans les trois dimensions. Ce corps 18 sert en quelque sorte d'échafaudage pour les fils de renfort 9 et il est susceptible de garder une structure tridimensionnelle même si on enlève les fils 9 du tissu 13. Pour la clarté du dessin, un nombre réduit de fils 9, 19, 20 a été représenté aux figures 3 à 6.

La nappe 7 est obtenue directement par tissage, sans découpage du tissu 13 dans le sens de la longueur.

L'ensemble du tissu 13 peut être réalisé par une seule opération de tissage, en utilisant par exemple une machine à projectile pour disposer les fils de renfort 9 dans le tissu 13 en coupant ensuite les fils 9 pour en enlever les parties situées hors de la nappe 7. Une telle opération est aisément comprise par l'homme de l'art et ce procédé de tissage n'est pas décrit plus en détail dans un but de simplification.

Il faut noter qu'on pourrait utiliser d'autres machines pour la réalisation du tissu 13, par exemple des machines à plusieurs navettes ou sans navette, notamment des machines à jet de fluide. Il faut noter aussi que les fils 9 pourraient former un fil de trame continu, ondulant entre les faces $16A_2$ et $17A_2$.

La structure de la nappe supérieure 8 est par exemple analogue à celle de la nappe inférieure 7 précédemment décrite. Le corps 18 a pour seul rôle de maintenir les fils de renfort 9. Les fils 19, 20 constituant ce corps peuvent donc être réalisés avec des matières très diverses, minérales, métalliques ou organiques, même si leurs caractéristiques mécaniques, notamment la résistance à la traction, ne sont pas très élevées. Par exemple, chacun des fils 19, 20 est réalisé avec un polymère organique pour avoir un poids faible. Ce polymère organique est par exemple la rayonne, un polyamide aromatique ou non aromatique, un polyester, un alcool polyvinylique, une polyoléfine. Il peut être avantageux de réaliser les fils 19, 20 avec une matière compatible avec la matière avec laquelle ils sont en contact dans l'enveloppe 1, ou identique à cette matière, ces fils 19, 20 étant par exemple réalisés en polyuréthanne si l'enveloppe 1 est obtenue par coulée de matières susceptibles de réagir entre elles pour donner des polyuréthannes. Il peut être avantageux de réaliser les fils 19, 20 avec une matière thermoplastique pour faciliter la soudure des extrémités du tissu 13 par des moyens thermiques lors du découpage et de l'aboutage du tissu 13 pour obtenir une nappe sans fin. Les fils de renfort 9 doivent, eux, être capables de supporter les contraintes auxquelles est soumis le sommet. Ils doivent donc avoir des caractéristiques mécaniques élevées, en particulier la résistance à la traction de ces fils doit être élevée. Ces fils de renfort 9 sont réalisées par exemple avec une matière métallique, notamment l'acier, une matière minérale, notamment le verre, ou une matière organique, par exemple pour diminuer le poids et limiter les risques de corrosion. Cette matière organique peut être par exemple la rayonne, un polyamide aromatique ou non aromatique, un polyester, un alcool polyvinylique. Il va de soi que les fils 9, 19, 20 peuvent être réalisés avec des matières identiques ou différentes et que chacun de ces fils peut comporter plusieurs matières avec éventuellement des adjuvants divers, notamment des charges.

Les fils 19, 20 constituant le corps 18 ont de préférence une section droite dont la surface a une aire plus faible que celle de la surface de la section droite des fils de renfort 9 de telle sorte que la contribution de ces fils 19, 20 au renfort de la nappe soit la plus faible possible. Avantageusement, les fils 19, 20 ont une section droite dont la surface a une aire au plus égale au quart de celle de la surface de la section droite des fils de renfort 9. Dans ces conditions, lorsque les fils 9, 19, 20 ont une forme cylindrique à section droite circulaire, le diamètre des fils 19, 20 est de préférence inférieur au diamètre des fils de renfort 9 et avantageusement, le diamètre des fils 19, 20 est au plus égal à la moitié du diamètre des fils de renfort 9.

A titre d'exemple, l'enveloppe 1 est réalisée par coulée de matières fluides ou pâteuses susceptibles de donner par réaction un polyuréthanne, cette réalisation se faisant selon un procédé en une seule étape.

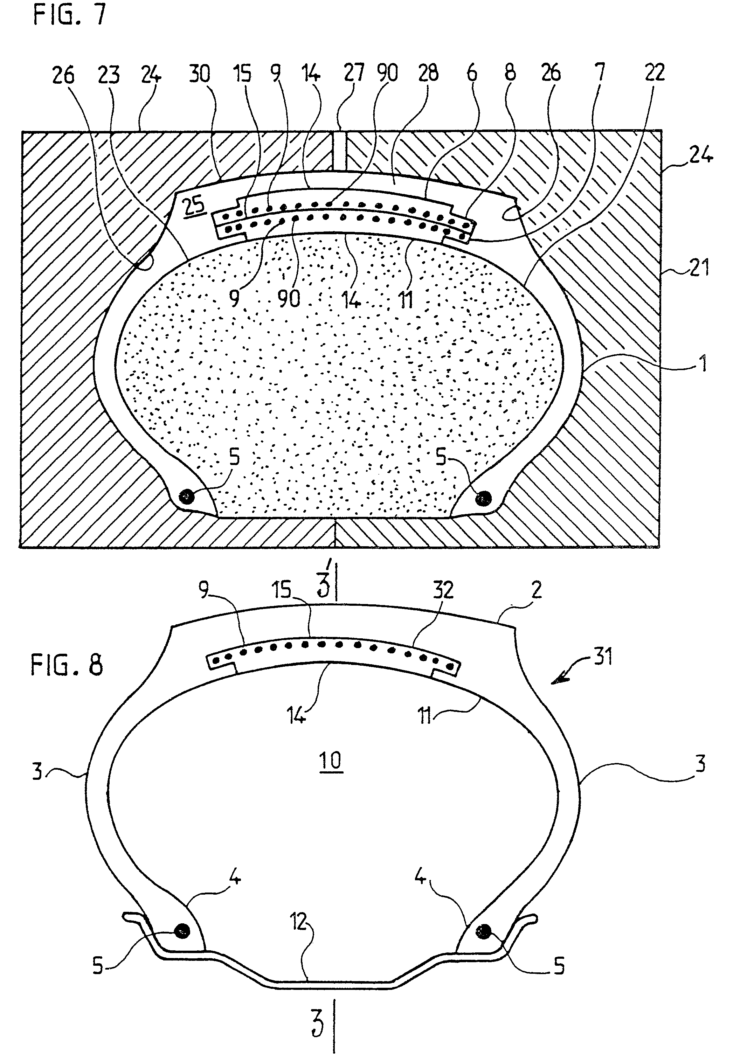

Ce procédé utilise un moule 21 représenté en partie à la figure 7. La nappe inférieure 7 qui avait une forme plane avec deux extrémités, est préalablement mise sous la forme d'un anneau par exemple par soudure bout à bout des extrémités. Après cette soudure, les fils de chaîne 19 sont pratiquement disposés dans des plans $P_{19}$ parallèles aux bords de la nappe sans fin ainsi obtenue. Lors de l'assemblage bout à bout des extrémités de cette nappe, il est important que deux fils 9 successifs soient séparés par une distance pratiquement constante sur tout l'anneau obtenu, y compris au niveau de l'aboutage des extrémités.

Après aboutage, la face externe de cet anneau est constituée par la face supérieure 15 et la face interne de l'anneau est constituée par la face inférieure 14, cette face inférieure 14 étant plus étroite que la face supérieure 15, comme précédemment décrit.

La nappe supérieure 8 est elle aussi mise sous la forme d'un anneau par aboutage de ses extrémités mais la disposition de cette nappe 8 sans fin est inverse de celle de la nappe 7, c'est-à-dire que la face externe de cet anneau 8 est constituée par la face 14 et que la face interne de cet anneau 8 est constituée par la face 15, la face interne 15 de l'anneau 8 étant donc plus large que la face externe 14 de cet anneau et constituant une face principale inférieure, tandis que la face externe 14 de cet anneau 8 constitue une face principale supérieure.

On dispose la nappe inférieure 7 sur le noyau 22 du moule 21 de telle sorte que la face inférieure étroite 14 de cette nappe 7 soit directement au contact de la face convexe 23 du noyau 22. On dispose la nappe supérieure 8 sur la nappe inférieure 7, c'est-à-dire que les faces larges 15 de ces deux nappes sont directement au contact l'une de l'autre, la face étroite 14 de la nappe 8 ayant donc, dans l'armature de renfort 6 ainsi obtenue, la distance radiale la plus grande. On ferme ensuite les deux coquilles 24 du moule 21 autour du noyau 22 de façon à obtenir une cavité 25 délimitée par la face convexe 23 du noyau 22 et par les faces concaves 26 des coquilles 24. L'armature de renfort 6 se trouve ainsi disposée dans cette cavité 25 de même que les tringles 5 que l'on a préalablement fixées dans le moule 21 par des moyens connus avant de refermer les coquilles 24. Cette cavité 25 a par exemple la même forme que l'enveloppe 1 terminée. On fait alors arriver dans la cavité 25 par le conduit 27 un mélange qui forme dans le moule un polyuréthanne 28, de façon connue en soi. Par définition, les vides 29 des tissus sont les vides entre les fils 9, 19, 20 de ces tissus (figures 3, 4) et pratiquement tous ces vides 29 sont susceptibles d'être remplis de matière 28, pour les nappes 7, 8. L'arrivée du mélange dans la cavité 25 se fait par exemple sous vide, mais d'autres techniques de réalisation sont possibles, par exemple des techniques de centrifugation. On obtient ainsi l'ensemble de l'enveloppe 1 par cette coulée.

Dans un but de simplification, les autres parties du moule 21, de même que les moyens permettant de fixer les tringles 5 dans le moule, n'ont pas été représentés sur le dessin. La face inférieure 14 de la nappe 7 constitue donc en partie la face interne 11 de l'enveloppe 1, et la matière 28 qui recouvre l'armature de renfort 6 constitue la bande de roulement 30 de l'enveloppe 1.

Lorsque les nappes 7, 8 sont incorporées dans l'enveloppe 1, chacune de ces nappes présente les caractéristiques suivantes au voisinage du plan équatorial zz' de l'enveloppe 1.

— Les fils de chaîne 19 ondulent pratiquement dans des plans parallèles au plan équatorial zz';

— les fils de trame 20 et les fils de renfort 9 sont pratiquement disposés dans les cylindres de révolution dont l'axe est l'axe de révolution yy' de l'enveloppe 1, les fils 9, 20 de chacune des nappes 7, 8 faisant avec le plan équatorial zz' l'angle $\alpha_7$ ou $\alpha_8$, ces angles étant pratiquement égaux à 23° et de sens opposés dans l'exemple décrit, le nombre de cylindres des fils de trame étant de 7, chacun de ces cylindres correspondant à un niveau $N_{20}$ précédemment défini:

— les faces latérales 16, 17 des nappes 7, 8 forment les faces latérales de ces nappes dans l'enveloppe 1, les faces élémentaires $16A_2$, $17A_2$ étant plus éloignées du plan équatorial zz' que les faces élémentaires $16A_1$, $17A_1$, ces faces $16A_1$, $16A_2$, $17A_1$, $17A_2$ ayant des formes légèrement tronconiques, les sommets de ces cônes, non représentés sur le dessin dans un but de simplification, étant situés sur l'axe de révolution yy'. Dans l'enveloppe 1, les fils de renfort 9 de chaque nappe 7, 8 sont pratiquement disposés sur une surface $C_9$, ces deux surfaces $C_9$ étant représentées en pointillés à la figure 1.

L'invention présente les avantages décrits ci-dessous.

1) Chaque nappe 7, 8 est facile à disposer dans le moule 21 car il suffit de la poser par exemple sur le noyau 22. Le corps tridimensionnel 18 de chaque nappe garantit un positionnement exact dans l'espace des fils de renfort 9, à l'intérieur de l'enveloppe 1 car il garantit:

— un positionnement exact de fils de renfort 9 les uns par rapport aux autres;

— un positionnement exact de l'ensemble 90 des fils de renfort 9 par rapport à la face 23 du noyau 22 ou par rapport à toute autre partie du moule 21 avec laquelle le corps 18 est en contact.

2) Le positionnement exact des fils de renfort 9 permet la réalisation d'enveloppes de pneumatiques ayant une qualité de fabrication très régulière, pratiquement sans risque de détérioration due à des déplacements de ces fils de renfort en cours de fabrication.

3) Etant donné que pour chaque nappe 7, 8 le corps 18 maintenant les fils de renfort 9 a une structure tridimensionnelle avec un grand nombre de fils 19, 20, ce corps n'introduit pratiquement aucune hétérogénéité dans l'enveloppe 1. Cette enveloppe possède alors une symétrie de révolution pratiquement parfaite, sans que le corps 18 provoque des phénomènes vibratoires nocifs. Il existe de plus un très bon collage entre l'armature de renfort 6 et la matière 28 avec laquelle elle est en contact, de telle sorte que cette enveloppe se caractérise par un confort et une durée de vie satisfaisants.

4) Les nappes 7, 8 peuvent être légères en prenant par exemple pour tous les fils 9, 19, 20 des polymères organiques qui présentent en outre l'avantage de limiter les risques de corrosion.

5) La perméabilité des faces latérales 16, 17 est grande dans les directions perpendiculaires à leurs faces élémentaires, grâce à l'amincissement du tissu 13 dans les régions latérales $R_1$, $R_2$, cet amincissement augmentant les surfaces de contact entre les faces 16, 17 et la matière 28.

6) L'amincissement de la nappe inférieure 7 dans les régions latérales $R_1$, $R_2$ permet de limiter les risques de détérioration sur la face interne 11 de l'enveloppe 1. L'explication de ce phénomène est la suivante. Chaque extrémité latérale 900 de cette nappe inférieure 7 se comporte en quelque sorte comme une articulation pour le flanc 3 situé du même côté que cette extrémité latérale, par rapport au plan équatorial zz' de l'enveloppe, les extrémités 900 étant les points de l'ensemble renforçant 90 qui se trouvent les plus éloignés du plan équatorial zz'. Dans le plan radial de la figure 1, les points de l'enveloppe situés à la fois sur la face interne 11 et sur des droites perpendiculaires aux surfaces $C_9$ et passant par les extrémités 900 sont soumis à des contraintes de tension particulièrement élevées par suite de l'articulation précédemment décrite. Un tel point $P_1$ est représenté à la figure 1, ce point étant situé sur la face interne 11 et sur une droite $D_1$ perpendiculaire à la surface $C_9$ de la nappe inférieure 7 et passant par une extrémité 900 de cette nappe, le point $P_1$ étant situé du même côté que la face latérale 16 de la nappe 7 par rapport au plan équatorial zz'. Le plan radial de la figure 1, passant par $P_1$, coupe dans la nappe 7 la face principale inférieure 14 et la face latérale 16 suivant deux traces, non référencées sur le dessin dans un but de simplification, ces traces se rejoignant au point M qui est donc, dans ce plan radical, pour la nappe 7, l'extrémité de la face 14 située du même côté que le point $P_1$ par rapport au plan équatorial zz'. On voit que grâce à l'amincissement de la nappe inférieure 7, le point $P_1$ se trouve situé à une distance notable de l'extrémité M, c'est-à-dire à une distance notable de l'interface I entre la face 16 de la nappe 7 et la matière 28 extérieure à cette face, au voisinage de la face principale inférieure 14 de la nappe 7. De préférence, la distance entre les points $P_1$ et M est au moins égale à la moitié de l'épaisseur maximum E de la nappe 7, mesurée dans sa région centrale $R_c$ entre les faces 14, 15 dans l'enveloppe 1, dans le plan équatorial zz' ou au voisinage de ce plan équatorial. Les mêmes constatations peuvent être faites au voisinage de l'autre extrémité 900 de l'ensemble 90 de la nappe 7 de l'autre côté du plan équatorial zz'. La déformation de la nappe 7 dans l'enveloppe 1 est faible, aussi, lorsqu'on dispose la nappe 7 de façon à ce qu'elle ait une forme générale plane et lorsqu'on la coupe par un plan perpendiculaire à la fois aux faces principales 14, 15 et aux plans de chaîne $P_{19}$, c'est-à-dire perpendiculaire à la longueur de la nappe 7, on obtient une section telle que, sur elle, la différence entre d'une part la distance séparant les extrémités 900 (c'est-à-dire la largeur de l'ensemble 90) et d'autre part la longueur de la trace de la face inférieure 14 (c'est-à-dire la largeur de la face inférieure étroite 14) soit au moins égale à E, E ayant pratiquement la même valeur lorsque la nappe 7 a une forme générale plane ou lorsqu'elle est disposée dans l'enveloppe 1. Sur la figure 3 sont représentées la largeur de l'ensemble 90, référencée $Z_{90}$, cette largeur étant la même que celle de la nappe 7, et la largeur de la face inférieure 14, référencée $Z_{14}$.

La bonne répartition des contraintes obtenue dans la partie inférieure du sommet 2 grâce à l'amincissement de la nappe 7 subsiste lorsque la face principale inférieure 14 de cette nappe se trouve proche de la face interne 11 sans en faire partie, notamment lorsque la distance entre les faces 11 et 14 est au plus égale à H/5, H étant l'épaisseur du sommet 2 mesurée dans le plan équatorial zz' ou au voisinage de ce plan, la distance entre les faces 11, 14 étant aussi mesurée dans ce plan équatorial ou au voisinage de ce plan.

L'amincissement de la nappe 8 peut également permettre de diminuer les risques de détérioration dans la partie supérieure du sommet 2 lorsque la face étroite 14 de cette nappe 8 se trouve proche de la surface de roulement 300 pour les mêmes raisons que celles précédemment décrites, notamment lorsque la distance entre cette face 14 et la surface de roulement 300 est au plus égale à H/5.

La nappe inférieure 7 a été réalisée de telle sorte que ses fils de renfort 9 sont dépourvus de contact avec les faces principales 14, 15 de cette nappe, mais on peut envisager des cas où les fils de renfort 9 seraient dans cette nappe, au contact de la face principale supérieure 15 tout en étant dépourvus de contact avec la face étroite 14.

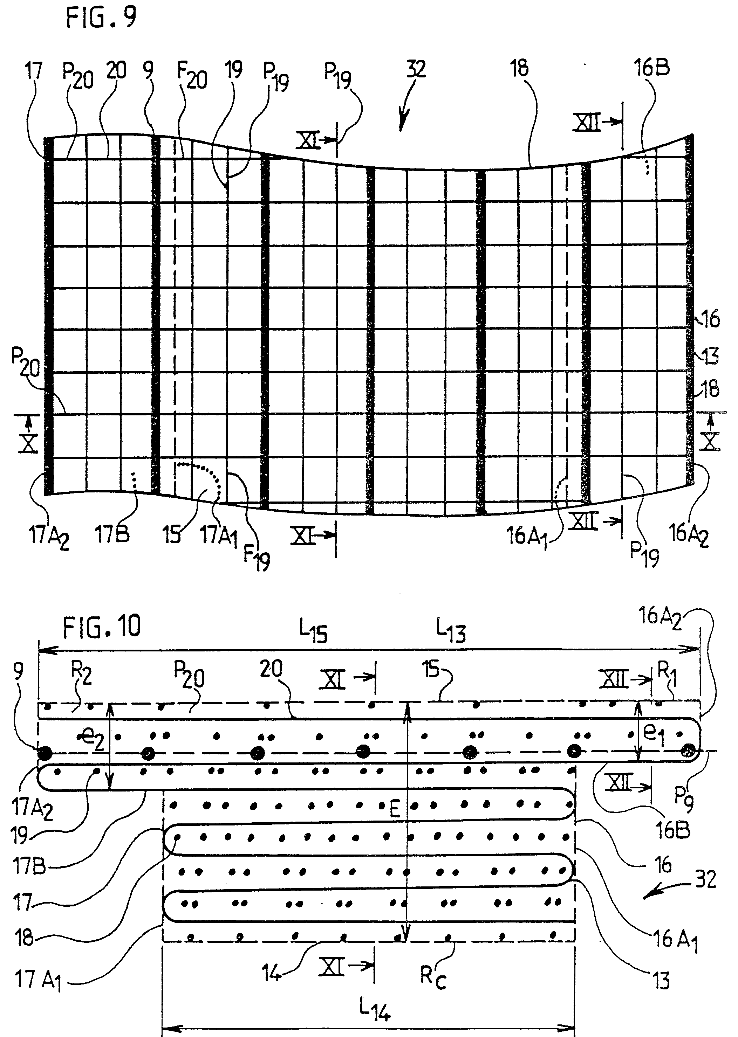

La figure 8 représente une enveloppe 31 comportant une autre nappe de renfort conforme à l'invention. Cette nappe de renfort 32 occupe par exemple la même place que la nappe 7 dans le sommet 2 de l'enveloppe 1. Une portion de cette nappe 32 est représentée vue de dessus à la figure 9, cette nappe 32 ayant alors une forme générale plane, avec des faces principales 14, 15 pratiquement planes et parallèles, c'est-à-dire qu'elle est représentée sur cette figure 9 avant son incorportation dans l'enveloppe 31. Cette nappe 32 se différencie des nappes 7, 8 précédemment décrites par le fait que le tissu 13 a pratiquement les caractéristiques suivantes. Dans le corps 18, les fils de trame 20 sont disposés dans des plans de trame $P_{20}$ perpendiculaires aux plans de chaîne $P_{19}$ des fils de chaîne 19. Les fils de renfort 9 sont parallèles entre eux et disposés dans un plan $P_{9}$ (représenté en pointillés à la figure 10) parallèle aux faces principales 14, 15, ces fils 9 étant parallèles aux plans de chaîne $P_{19}$ et constituant donc des fils de chaîne du tissu 13.

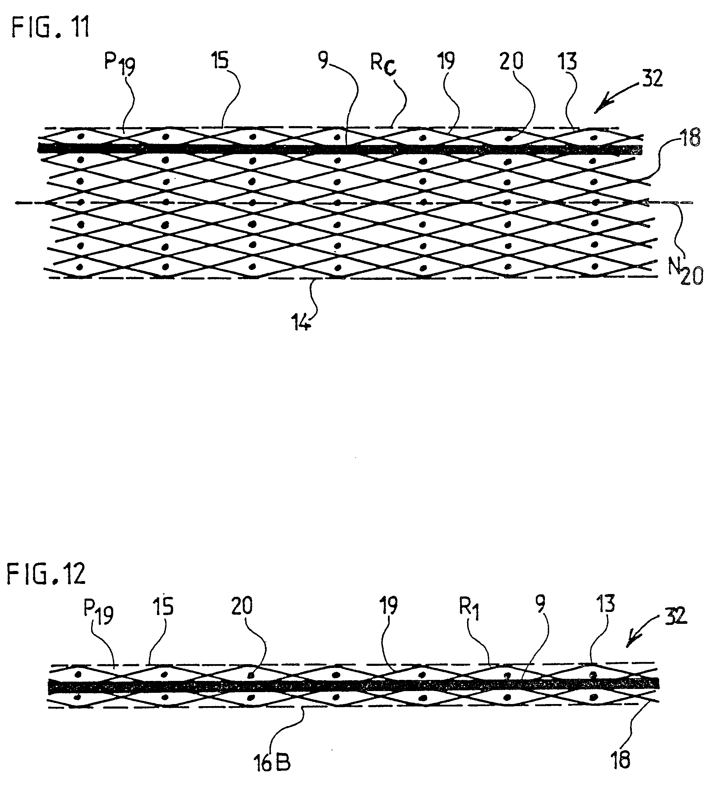

De façon analogue aux figures 4, 5, 6, la figure 10 est une coupe de la portion de nappe 32 selon un plan sectionnant les faces principales 14, 15 et les faces latérales 16, 17 du tissu 13, ce plan étant perpendiculaire aux faces principales 14, 15 et schématisé par la ligne droite X-X à la figure 9, la figure 11 est une coupe de la portion de nappe 32, dans la région centrale $R_c$ selon un plan perpendiculaire aux faces principales 14, 15 et parallèle aux faces élémentaires $16A_1$, $16A_2$, $17A_1$, $17A_2$, ce plan étant schématisé par la ligne droite XI-XI aux figures 9, 10, et la figure 12 est une coupe de la portion de nappe 32, dans la région latérale $R_1$ de cette portion, selon un plan perpendiculaire à la face principale 15 et à la face élémentaire 16B, le plan de la figure 12 étant parallèle aux faces élémentaires $16A_1$, $16A_2$, $17A_1$, $17A_2$, ce plan étant schématisé par la ligne droite XII-XII aux figures 9 et 10. Le plan de la figure 10 correspond à un plan de trame $P_{20}$, et les plans des figures 11, 12 correspondent chacun à un plan de chaîne $P_{19}$.

Dans les figures 10, 11, 12, les ondulations des fils de chaîne 19 et des fils de trame 20 sont analogues à celles précédemment décrites pour les nappes 7, 8 avec la différence que les plans de chaîne $P_{19}$ et les plans de trame $P_{20}$ sont perpendiculaires entre eux.

L'enveloppe 31 a par exemple la dimension 135-13 et elle est réalisée par coulée, de façon analogue à l'enveloppe 1 en réalisant un anneau avec la nappe 32 et en disposant cette nappe annulaire sur le noyau 22, la face inférieure étroite 14 de cette nappe 32 étant mise directement au contact de la face convexe 25 du noyau 22 pour que la face 14 constitue une partie de la face interne 11 de l'enveloppe 31.

La nappe 32 a les caractéristiques suivantes:

a) Dimensions géométriques:

— les épaisseurs $e_1$, $e_2$ sont pratiquement égales à 1,1 mm;

— l'épaisseur totale E est pratiquement égale à 2 mm;

— la longueur $L_{14}$ est pratiquement égale à 75 mm;

— la longueur $L_{15}$ est pratiquement égale à 85 mm.

Les références $e_1$, $e_2$, E, $L_{14}$, $L_{15}$ ont les mêmes significations que précédemment définies pour la nappe 7, avec la différence que le plan de trame $P_{20}$ où elles sont mesurées, pour la nappe 32, est perpendiculaire aux plans de chaîne $P_{19}$.

b) Nature et disposition des fils 19, 20 du corps 18.

Les fils de chaîne 19 et les fils de trame 20 ont chacun une structure de câble constituée par deux filés de titre 10 tex tordus à 1000 tours par mètre en Z, ces deux filés étant ensuite assemblés et tordus ensemble à 1000 tours par mètre en S pour donner les câbles. La matière de ces câbles 19, 20 est un polyester thermoplastique stabilisé à 130° C. Pour chacun de ces câbles, la force à la rupture est de 7N, l'allongement à la rupture de 26% et le diamètre de 0,15 mm.

Le corps 18 comporte 665 câbles de chaînes 19 pour 100 mm et 760 câbles de trame 20 pour 100 mm. Le décompte des câbles 19, 20 se fait sur toute l'épaisseur E, c'est-à-dire dans la région centrale $R_c$, dans un plan perpendiculaire aux faces principales 14, 15, ce plan étant un plan de trame $P_{20}$ pour le décompte des câbles de chaîne 19, et ce plan étant un plan de chaîne $P_{19}$ pour le décompte des câbles de trame 20, la distance de 100 mm précitée étant mesurée suivant l'intersection du plan considéré et d'une face principale 14, 15. Pour la clarté du dessin, un nombre réduit de câbles 19, 20 a été représenté aux figures 9 à 12.

Le nombre de niveaux $N_{20}$ est de 7 pour la région centrale $R_c$ et de 2 pour chaque région latérale $R_1$, $R_2$. La définition des niveaux $N_{20}$ est la même que celle donnée précédemment pour la nappe 7, un tel niveau $N_{20}$ étant représenté en pointillés à la figure 11.

c) Nature et disposition des fils de renfort 9.

Les fils de renfort 9 ont chacun une structure de câble constituée par deux filés de titre 167 tex tordus à 314 tours par mètre en Z, ces deux filés étant ensuite assemblés et tordus ensemble à 314 tours par mètre en S pour donner les câbles 9. La matière de ces câbles 9 est un polyamide aromatique. Pour chacun de ces câbles 9, la force à la rupture est de 57 daN, l'allongement à la rupture de 5,2% et le diamètre de 0,7 mm. Le nombre de ces câbles 9, mesuré dans un plan de trame $P_{20}$, est de 48 pour une distance de 100 mm mesurée sur une droite de ce plan passant par les axes de ces câbles. Pour la clarté du dessin, un nombre réduit de câbles de renfort 9 a été représenté aux figures 8 à 12.

d) Rigidité du tissu 13 et du corps 18.

On mesure d'une part la rigidité du tissu 13 avec le corps 18 et les câbles de renfort 9, et d'autre part, la rigidité du corps 18 seul. Chacune de ces rigidités est mesurée d'une part selon la direction moyenne $F_{19}$ des câbles de chaîne 19, cette direction $F_{19}$ étant parallèle aux câbles de renfort 9, cette rigidité est alors appelée «rigidité chaîne», et d'autre part selon la direction moyenne $F_{20}$ des câbles de trame 20, cette direction $F_{20}$ étant parallèle aux faces principales 14, 15 et perpendiculaire aux plans de chaîne $P_{19}$, cette rigidité est alors appelée «rigidité trame». A la figure 9, les références 19, $F_{19}$, $P_{19}$ sont représentées par les mêmes lignes droites et les références 20, $F_{20}$, $P_{20}$ sont représentées par les mêmes lignes droites.

Dans chaque cas, la rigidité correspond au rapport $F/L\varepsilon$, F étant la force nécessaire pour obtenir un allongement relatif $\varepsilon$ fixé qui est égal dans tous les cas à 2% et L étant la largeur du tissu 13 ou du corps 18 soumis à cette mesure, cette largeur étant mesurée le long d'une face principale 14, 15 et perpendidulairement à l'orientation où s'exerce la force F, c'est-à-dire perpendiculairement à la direction $F_{19}$ ou à la direction $F_{20}$. Cette largeur est par exemple égale à 100 mm, le rapport $F/L\varepsilon$ étant pratiquement indépendant de la valeur L lorsque les nombres de câbles 9, 19, 20 correspondant à cette valeur L sont grands, ce qui est le cas pour la nappe 32. Ces mesures de rigidité sont effectuées dans la région centrale $R_c$.

Les valeurs de rigidité sont les suivantes:
Tissu 13: rigidité chaîne: 2400 kN/m; rigidité trame: 78 kN/M
Corps 18: rigidité chaîne: 70 kN/m; rigidité trame: 78 kN/m.

De préférence, dans la nappe 32, le rapport entre, d'une part, la rigidité du tissu 13 mesurée selon l'orientation des fils de renfort 9 et, d'autre part, la rigidité du corps 18 seul mesurée selon cette même orientation est au moins égal à 10 et avantageusement au moins égal à 30 et ceci quelle que soit la structure des fils 9, 19, 20, de telle sorte que l'effet de renfort ne soit pratiquement dû qu'aux fils de renfort 9. C'est ainsi que dans l'exemple cité pour la nappe 32, le rapport rigidité chaîne du tissu 13/rigidité chaîne du corps 18 est pratiquement égal à 34.

Lorsque le tissu 13 et le corps 18 sont imprégnés d'une gomme polyuréthanne de module 40 MPa, les valeurs de rigidité sont les suivantes, ces rigidités étant mesurées de la même façon que précédemment défini:
Tissu 13 imprégné: rigidité chaîne: 2510 kN/m; rigidité trame: 463 kN/m;
Corps 18 imprégné: rigidité chaîne; 550 kN/m; rigidité trame: 552 kN/m.

Toutes les caractéristiques géométriques précédemment définies pour la nappe 32 correspondent à une nappe avant incorporation dans l'enveloppe 31, cette nappe 32 étant alors disposée de façon que les faces principales 14, 15 soient planes et parallèlement comme précédemment décrit.

Lorsque la nappe 32 est incorporée dans l'enveloppe 31, elle présente les caractéristiques suivantes au voisinage du plan équatorial zz' de l'enveloppe 31:
— les câbles de chaîne 19 ondulent dans des plans pratiquement parallèles au plan équatorial zz';
— les câbles de renfort 9 sont pratiquement disposés dans un cylindre de révolution dont l'axe est l'axe de révolution de l'enveloppe 31, ces câbles de renfort 9 étant parallèles au plan équatorial zz', c'est-à-dire qu'ils ont une orientation longitudinale;
— les câbles de trame 20 sont pratiquement disposés dans 7 cylindres de révolution dont l'axe est l'axe de révolution de l'enveloppe 31, ces câbles 20 étant perpendiculaires au plan équatorial zz';
— les faces latérales 16, 17 forment les faces latérales de la nappe 32 dans l'enveloppe 31.

Les avantages présentés par la nappe 32 sont les mêmes que ceux précédemment décrits pour les nappes 7, 8.

L'enveloppe 31 pourrait comporter plusieurs nappes 32 superposées, par exemple en enroulant cette nappe sur elle-même avant réalisation de l'enveloppe.

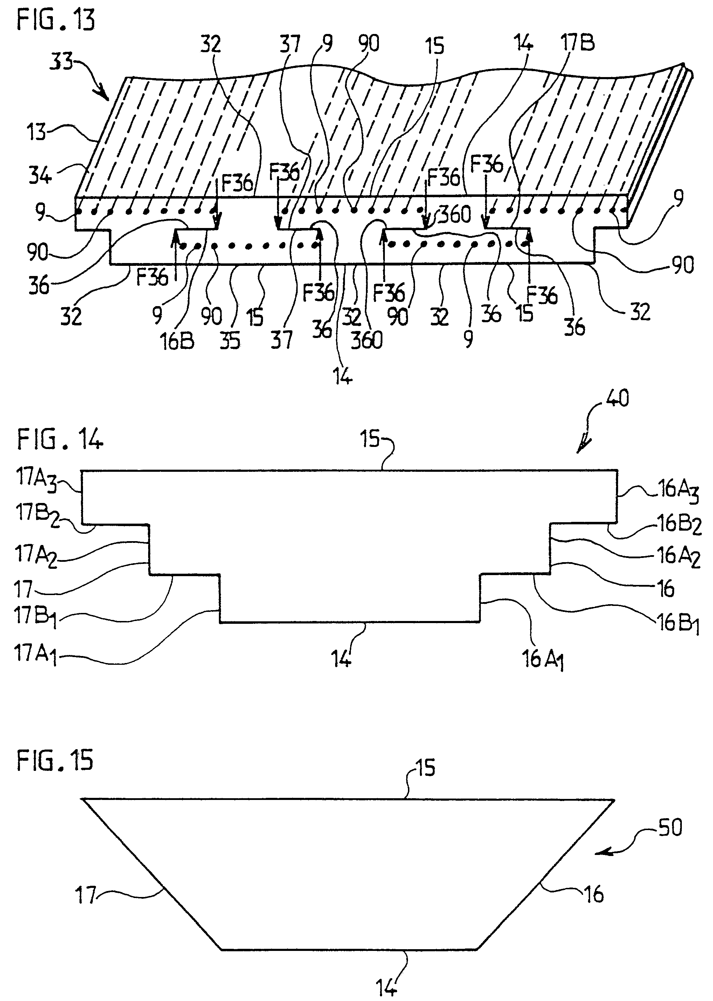

La nappe 32 peut être réalisée directement par tissage, sous forme d'un ruban que l'on découpe à la longueur désirée. Cette nappe 32 peut aussi être réalisée par découpage d'une bande de tissu comme représenté à la figure 13, le découpage permettant d'obtenir les faces latérales 16, 17.

Sur cette figure 13, on voit une bande 33 de tissu 13, le tissu de cette bande ayant été effectué en une seule opération. Dans cette bande 33, les fils de renfort 9 parallèles entre eux constituent des ensembles renforçants 90, ces ensembles 90 étant situés alternativement à proximité d'une face principale 34 de la bande 33 puis à proximité de l'autre face principale 35 de la bande 33.

Deux ensembles 90 successifs se chevauchent partiellement en étant séparés par une poche 36 ménagée dans la bande 33 lors du tissage. Ces poches qui font toute la longueur du tissu, dans le sens des fils 9, ont les faces principales 37 qui sont parallèles aux faces principales 34, 35. Après tissage, il suffit de découper la bande 33 perpendiculairement aux faces principales 34, 35 et parallèlement aux fils 9 pour aboutir aux extrémités 350 des poches 36, ces extrémités étant parallèles aux fils 9. Le découpage est schématisé par les flèches $F_{36}$ à la figure 13, ce découpage étant tel qu'après découpage, la bande 33 soit constituée par une succession de nappes 32, disposées côte à côte de façon tête-bêche, les faces principales 37 des poches 36 constituant des faces élémentaires 16B, 17B, chaque face principale 34, 35 devenant alternativement des faces principales 14 puis 15. Dans ces nappes 32, les faces élémentaires $16A_1$, $16A_2$, $17A_1$, $17A_2$ sont obtenues par les coupes $F_{36}$. On peut ainsi obtenir plusieurs nappes conformes à l'invention à partir d'une seule opération de tissage, ce qui permet de diminuer les coûts. Le découpage selon les flèches $F_{36}$ peut être effectué par tout moyen approprié, par exemple avec un fil chauffé si les fils du corps 18 sont en matière thermoplastique.

L'invention couvre les cas où le rétrécissement entre les faces principales 14, 15 s'effectue en plusieurs paliers sur les faces latérales 16, 17. C'est ainsi que la figure 14 montre une coupe d'une nappe 40 conforme à l'invention, cette coupe étant effectuée de façon analogue à celles des figures 4, 10.

La face latérale 16 comporte trois faces élémentaires $16A_1$, $16A_2$, $16A_3$ parallèles entre elles et perpendiculaires aux faces principales 14, 15, les faces $16A_1$, $16A_2$ étant reliées par la face élémentaire $16B_1$ et les faces $16A_2$, $16A_3$ étant reliées par la face élémentaire $16B_2$, comme des marches d'un escalier, ces faces $16B_1$, $16B_2$ étant parallèles aux faces principales 14, 15. La face latérale 17 comporte également les faces élémentaires $17A_1$, $17A_2$, $17A_3$, $17B_1$, $17B_2$ dont la disposition est analogue à celle des faces élémentaires de la face latérale 16. Le rétrécissement de la face inférieure 14 par rapport à la face supérieure 15 est donc effectué ainsi en deux étapes, ce qui favorise une meilleure répartition des contraintes dans l'article utilisant cette nappe.

On peut aussi envisager des cas où les faces latérales 16, 17 sont continues et obliques comme dans la nappe 50 représentée en coupe à la figure 15, cette coupe étant effectuée de façon analogue aux coupes des figures 4 et 10. La nappe 50 a dans ce cas une coupe en forme de trapèze. Cette nappe présente l'avantage d'une forme régulière mais sa réalisation par tissage nécessite des machines plus complexes que dans les cas précédemment décrits.

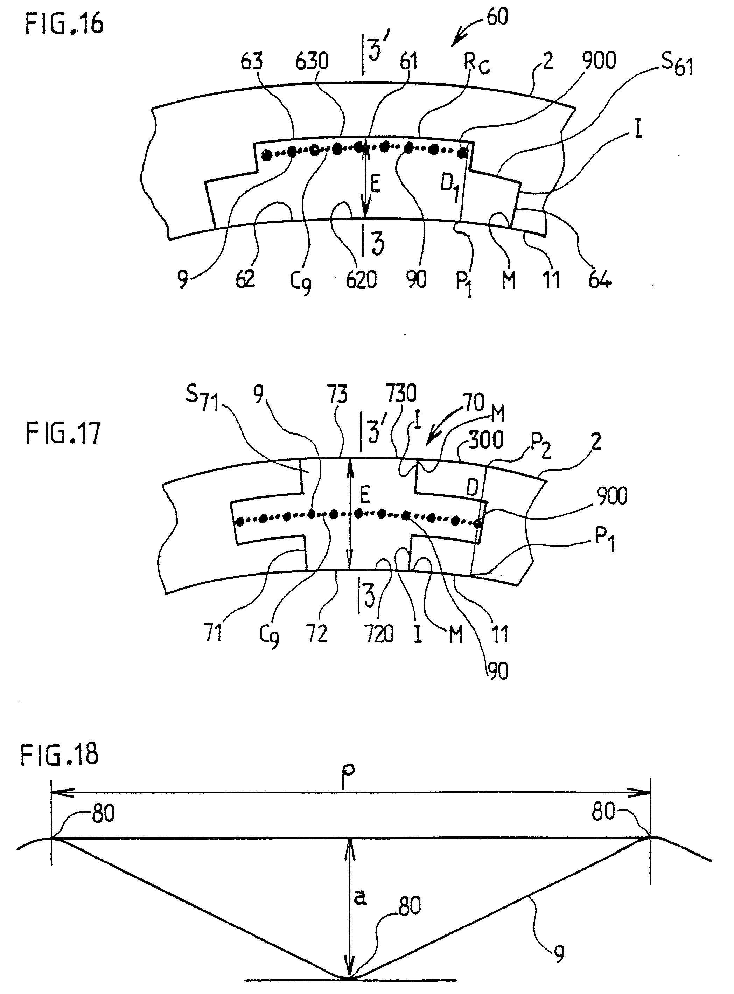

La figure 16 représente en coupe radiale une portion du sommet 2 d'une enveloppe de pneumatique 60 comportant une autre nappe de renfort de sommet conforme à l'invention.

Cette nappe 61 comporte une face principale inférieure 62 constituant en partie la face interne 11 de l'enveloppe 60 et une face principale supérieure 63 située à l'intérieur du sommet 2. Sur le plan radial de la figure 16, la trace 630 de la face supérieure 63 a une longueur notablement inférieure à la longueur de la trace 620 de la face inférieure 62, cette dernière longueur étant pratiquement égale à la largeur de la section $S_{61}$ de la nappe 61 par ce plan radial. L'ensemble renforçant 90 des fils de renfort 9 est pratiquement disposé sur une surface $C_9$ représentée en pointillés à la figure 16 et il est disposé à proximité de la face supérieure 63, dans la région centrale $R_c$. La droite $D_1$ passant par une extrémité latérale 900 de cet ensemble 90 est perpendiculaire à la surface $C_9$ et coupe la face 11 au point $P_1$. Ce point $P_1$ est soumis à des contraintes de tension élevées, par suite de l'articulation du sommet 2 à l'extrémité 900, mais il se trouve au sein de la nappe 61, à une distance notable de la face latérale 64 de la nappe 61, cette face latérale étant située du même côté que $P_1$ par rapport au plan équatorial zz' et aboutissant à la face interne 11. Donc le point $P_1$ est situé à une distance notable de l'interface I entre cette face 64 et la matière du sommet 2 extérieure à cette face, au voisinage de la face principale inférieure 62, ce qui garantit une bonne répartition de contraintes autour du point $P_1$ en évitant les risques de séparation entre la nappe 61 et le reste du sommet. La nappe 61 apporte les mêmes avantages que la nappe 7 mais elle a l'inconvénient d'utiliser une quantité de tissu 13 plus importante.

La figure 17 représente en coupe radiale une portion du sommet 2 d'une enveloppe de pneumatique 70 comportant une autre nappe de renfort de sommet conforme à l'invention. Cette nappe 71 comporte une face principale inférieure 72 qui constitue en partie la face inférieure 11 de l'enveloppe 70 et une face principale supérieure 73 qui constitue en partie la surface de roulement 300 de cette enveloppe. Sur le plan radial de la figure 17, la trace de la face 72 est référencée 720 et la trace de la face 73 est référencée 730. La longueur de chacune de ces traces est notablement inférieure à la largeur de la section $S_{71}$ de la nappe 71, par le plan radial, ces faces principales 72, 73 étant toutes deux des «faces étroites». L'ensemble renforçant 90 de fils de renfort 9 est disposé dans la partie la plus large de la nappe 71, pratiquement sur une surface $C_9$ représentée en pointillés à la figure 17, et occupe pratiquement toute la largeur de la section $S_{71}$. La droite D passant par une extrémité latérale 900 et cet ensemble 90 est perpendiculaire à la surface $C_9$ et coupe la face 11 au point $P_1$ et la surface de roulement 300 au point $P_2$. La face interne 11 et la surface de roulement 300 sont dites «faces du sommet 2». Ces points $P_1$, $P_2$ sont soumis à des contraintes de tension élevées par suite de l'articulation du sommet 2 à l'extrémité 900 mais chacun de ces points se trouve hors de la nappe 71 à une distance notable de cette nappe, avec les avantages précédemment décrits qui en découlent.

Dans les enveloppes 60, 70, la distance, dans un plan radial, de chaque point $P_1$, $P_2$ à l'extrémité M de la face principale 62, 72, 73 qui constitue en partie la face du sommet 11, 300 où se trouve ce point $P_1$, $P_2$ est supérieure à la moitié de l'épaisseur maximum E de la nappe, cette extrémité M étant située du même côté que ce point $P_1$, $P_2$ par rapport au plan équatorial zz' de l'enveloppe 60, 70 correspondante.

Lorsque chaque nappe 61, 71 est disposée de façon à avoir une forme générale plane avec des faces principales planes et parallèles, tout plan sectionnant les faces principales et latérales du tissu, ce plan étant perpendiculaire à la longueur du tissu et aux faces principales du tissu, donne une section telle que la différence, en valeur absolue, entre d'une part la largeur de l'ensemble renforçant 90 (c'est-à-dire la distance entre les extrémités latérales 900) et d'autre part l'une des largeurs maximum ou minimum de la section, soit au moins égale à l'épaisseur maximum E de la nappe.

Dans les nappes conformes à l'invention, il est possible de disposer les fils de renfort sur plusieurs plans, dans l'épaisseur des nappes. Dans une telle nappe, il peut être utile de croiser les fils de renfort 9 d'un plan à l'autre, ces fils étant parallèles entre eux dans chaque plan, par exemple pour réaliser l'ensemble de l'armature de sommet avec cette nappe. Une telle nappe peut être telle par exemple que les fils de renfort soient disposés sur deux plans, les fils de renfort étant orientés suivant les fils de chaîne dans un plan et suivant les fils de trame dans l'autre plan.

Il va de soi d'autre part que les nappes conformes à l'invention peuvent être combinées avec des nappes de renfort connues.

L'invention couvre en outre les cas où au moins une des caractéristiques suivantes est utilisée.

1) La perméabilité du tissu 13 est de préférence au moins égale à $10^{-11} m^2 \cdot Pa^{-1} \cdot s^{-1}$. Cette perméabilité est mesurée en faisant traverser le tissu 13 par un fluide dont la masse volumique est égale à 1000 kg/m³ et dont la viscosité dynamique est égale à 1 Pa·s. La perméabilité représente le rapport entre la vitesse d'écoulement laminaire du fluide et le gradient de pression qui provoque cet écoulement.

Cette perméabilité est avantageusement supérieure à $500 \times 10^{-11} m^2 \cdot Pa^{-1} \cdot s^{-1}$.

2) Le tissu 13 a une porosité au moins égale à 50%, cette porosité variant de préférence de 70 à 90%; cette porosité, déterminée par le calcul, est égale au rapport v/V, «v» étant le volume vide du tissu et V le volume total du tissu, c'est-à-dire la somme du volume vide «v» et du volume occupé par les fils 9, 19, 20.

La perméabilité et la porosité du tissu 13 sont déterminées dans la région centrale $R_c$ du tissu 13 lorsque ce tissu est disposé de façon à avoir une forme générale plane. Ces chiffres varient peu lors de l'utilisation du tissu 13 pour réaliser l'enveloppe, c'est-à-dire lorsque ce tissu 13 n'est plus plan. Les chiffres précédemment cités permettent une bonne imprégnation du tissu 13 par la matière 28.

3) Les fils de renfort 9 peuvent être disposés dans le tissu 13 de telle sorte qu'ils ondulent légèrement, par exemple dans le plan $P_9$. Un tel fil 9 ondulé est représenté à la figure 18. Le taux d'ondulation T de ces fils est par exemple inférieur à 10%, le taux T étant défini par la relation T = a/p «a» étant l'amplitude de l'ondulation mesurée entre deux crêtes successives 80 du fil 9 et «p» étant la longueur d'onde de cette ondulation; l'orientation de chaque fil ondulé 9 est représentée alors par son orientation moyenne lorsque le tissu 13 est disposé de façon à avoir une forme générale plane.

4) Le rapport entre, d'une part, la rigidité du tissu 13 mesurée selon chaque orientation des fils de renfort 9 et d'autre part, la rigidité du corps 18 seul mesurée selon cette orientation, est au moins égal à 10 et avantageusement au moins égal à 30, le tissu étant, pour cette mesure, dépourvu de fils de renfort d'orientation autre que celle selon laquelle la rigidité est mesurée; la rigidité correspond dans chaque cas au rapport F/Lε, F étant la force nécessaire pour obtenir un allongement relatif ε fixé qui est égal dans tous les cas à 2% et L étant la largeur du tissu 13 ou du corps 18 soumis à cette mesure, cette largeur étant mesurée le long des faces principales 14, 15 et perpendiculairement à la direction d'application de la force, le rapport F/Lε étant pratiquement indépendant de la valeur L lorsque les nombres des fils 9, 19, 20 correspondant à cette valeur L sont grands.

5) Les fils de renfort d'une même nappe peuvent être constitués de matières différentes et ceci qu'il y ait une ou plusieurs orientations pour ces fils; c'est ainsi par exemple que les fils de renfort 9 correspondant à une orientation peuvent être métalliques et que les fils de renfort 9 correspondant à une autre orientation peuvent être réalisés avec une matière organique, notamment un polyamide aromatique.

6) Les nappes conformes à l'invention peuvent être utilisées pour des enveloppes de pneumatiques dont la technique de réalisation est différente de la coulée. C'est ainsi par exemple que ces nappes peuvent être utilisées pour réaliser des enveloppes de pneumatiques par confection sur un tambour notamment en disposant les nappes conformes à l'invention soit directement sur le tambour pour qu'elles constituent au moins en partie une face des enveloppes, les fils de renfort étant dépourvus de contact avec cette face, soit sur une mince couche de gomme. Dans ce cas, il peut être avantageux d'imprégner les nappes avec une gomme avant de les incorporer dans les enveloppes.

7) Il est possible d'utiliser dans une même enveloppe plusieurs nappes conformes à l'invention telles que, dans un plan radial, les ensembles renforçants 90 aient des largeurs différentes.

8) Les nappes conformes à l'invention peuvent être telles que, lorsqu'elles sont disposées de façon à avoir une forme générale plane, les faces principales soient pratiquement planes et parallèles et tout plan sectionnant les faces principales et latérales du tissu 13 forme une section telle que les longueurs des traces des deux faces principales soient égales entre elles et égales à la largeur maximum de cette section, aucune de ces faces principales n'étant donc une «face étroite».

9) Les nappes conformes à l'invention peuvent être utilisées pour renforcer d'autres parties d'une enveloppe de pneumatique que le sommet, par exemple les bourrelets.

## Revendications

1. Nappe de renfort (7, 8; 32; 40; 50; 61; 71) destinée à être utilisée dans un article (1, 31, 60, 70), ladite nappe étant constituée au moins en partie par un tissu (13) dont les propriétés sont les suivantes:

a) il comporte un corps tridimensionnel (18) et des fils de renfort (9) disposés dans ce corps (18) et maintenus par ce corps;

b) pratiquement tous les vides (29) du tissu (13) sont susceptibles d'être remplis par au moins une matière (28) entrant dans la constitution de l'article (1, 31, 60, 70);

c) le tissu (13) comporte deux faces principales (14, 15; 62; 63; 72, 73) réunies par deux faces latérales (16, 17; 64);

d) lorsque le tissu (13) est disposé de façon à avoir une forme générale plane, les faces principales (14, 15; 62, 63; 72, 73) sont pratiquement planes et parallèles;

e) tout plan sectionnant les faces principales et latérales du tissu forme une section ($S_{13}$, $S_{61}$; $S_{71}$) dont la largeur ($L_{13}$, $L_{14}$), mesurée parallèlement aux faces principales, varie d'une face principale à l'autre.

2. Nappe selon la revendication 1, caractérisée en ce que les fils de renfort sont séparés les uns des autres par des fils du corps, de telle sorte que ces fils de renfort soient dépourvus de contact entre eux, et en ce que ces fils de renfort sont dépourvus de contact avec au moins une face principale.

3. Nappe selon l'une quelconque des revendications 1 ou 2, caractérisée en ce qu'elle comporte une région centrale et deux régions latérales, l'épaisseur de la nappe dans la région centrale étant supérieure à l'épaisseur de la nappe dans les régions latérales, ces épaisseurs étant mesurées selon des droites perpendiculaires à un plan quelconque qui est parallèle aux faces principales lorsque le tissu est disposé de façon à avoir une forme générale plane.

4. Nappe selon l'une quelconque des revendications 1 à 3, caractérisée en ce que le corps comporte des fils de chaîne, chacun de ces fils de chaîne ondulant pratiquement dans un plan, dit «plan de chaîne», en étant alternativement tangent à une face puis à une autre.

5. Nappe selon la revendication 4, caractérisée en ce que les plans de chaîne sont parallèles entre eux et parallèles à un plan quelconque perpendiculaire aux faces principales et parallèle à la longueur de la nappe.

6. Nappe selon l'une quelconque des revendications 1 à 5, caractérisée en ce que le corps comporte des fils de trame et des fils de chaîne et en ce que les fils de trame sont disposés entre les fils de chaîne, chaque fil de trame ondulant pratiquement dans un plan, dit «plan de trame», en étant alternativement tangent à une face latérale puis à l'autre lorsque le tissu est disposé de façon à avoir une forme générale plane.

7. Nappe selon la revendication 6, caractérisée en ce que les plans de trame sont parallèles entre eux et perpendiculaires aux faces principales.

8. Nappe selon l'une quelconque des revendications 6 ou 7 combinée à la revendication 3, caractérisée en ce que, au moins dans la région centrale, les fils de trame sont pratiquement disposés sur plusieurs surfaces.

9. Nappe selon la revendication 8, caractérisée en ce que dans la région centrale les fils de trame sont pratiquement disposés sur au moins quatre surfaces.

10. Nappe selon l'une quelconque des revendications 8 ou 9, caractérisée en ce que ces surfaces sont des plans parallèles aux faces principales.

11. Nappe selon l'une quelconque des revendications 1 à 10, caractérisée en ce qu'au moins une face latérale comporte des faces élémentaires planes lorsque le tissu est disposé de façon à avoir une forme générale plane.

12. Nappe selon l'une quelconque des revendications 1 à 11, caractérisée en ce qu'au moins une face latérale est continue lorsque le tissu est disposé de façon à avoir une forme générale plane.

13. Nappe selon l'une quelconque des revendications 1 à 12, caractérisée en ce que les fils de renfort ont une ou plusieurs orientations, lorsque le tissu est disposé de façon à avoir une forme générale plane.

14. Nappe selon la revendication 13, caractérisée en ce que les fils de renfort sont pratiquement disposés dans au moins un plan, les fils de renfort de ce plan ayant la même orientation.

15. Nappe selon la revendication 14 combinée à la revendication 10, caractérisée en ce que le ou les plans de fils de renfort sont parallèles aux plans dans lesquels sont disposés les fils de trame.

16. Nappe selon l'une quelconque des revendications 1 à 15, caractérisée en ce que le tissu comporte des fils de chaîne et des fils de trame et en ce que les fils de renfort constituent des fils de chaîne et/ou des fils de trame du tissu.

17. Nappe selon l'une quelconque des revendications 1 à 16, caractérisée en ce que les fils de renfort d'une part et les fils du corps d'autre part sont réalisés avec des matières différentes.

18. Nappe selon l'une quelconque des revendications 1 à 17, caractérisée en ce que les fils du corps ont une section droite dont la surface a une aire plus faible que celle de la surface de la section droite des fils de renfort.

19. Nappe selon la revendication 18, caractérisée en ce que les fils du corps ont une section droite dont la surface a une aire au plus égale au quart de celle de la surface de la section droite des fils de renfort.

20. Nappe selon l'une quelconque des revendications 1 à 19, caractérisée en ce que les fils de renfort sont réalisés avec un polyamide aromatique.

21. Nappe selon l'une quelconque des revendications 1 à 20, caractérisée en ce que le corps est réalisé au moins en partie avec une matière thermoplastique.

22. Nappe selon l'une quelconque des revendications 1 à 21, caractérisée en ce que la perméabilité du tissu est au moins égale à $10^{-11}\text{m}^2 \cdot \text{Pa}^{-1} \cdot \text{s}^{-1}$ pour un fluide dont la masse volumique est égale à $1000\,\text{kg/m}^3$ et dont la viscosité dynamique est égale à $1\,\text{Pa} \cdot \text{s}$.

23. Nappe selon la revendication 22, caractérisée en ce que la perméabilité du tissu est supérieure à $500 \times 10^{-11}\text{m}^2 \cdot \text{Pa}^{-1} \cdot \text{s}^{-1}$.

24. Nappe selon l'une quelconque des revendications 1 à 23, caractérisée en ce que la porosité du tissu est au moins égale à 50%.

25. Nappe selon la revendication 24, caractérisée en ce que la porosité du tissu varie de 70% à 90%.

26. Nappe selon l'une quelconque des revendications 1 à 25, caractérisée en ce que le rapport entre, d'une part, la rigidité du tissu mesurée selon chaque orientation des fils de renfort et, d'autre part, la rigidité du corps seul mesurée selon cette orientation, est au moins égal à 10, ces mesures de rigidité étant effectuées pour un allongement relatif de 2%, le tissu étant, pour cette mesure, dépourvu de fils de renfort d'orientation autre que celle selon laquelle la rigidité est mesurée.

27. Nappe selon la revendication 26, caractérisée en ce que ce rapport est au moins égal à 30.

28. Nappe selon l'une quelconque des revendications 1 à 27, caractérisée en ce que, lorsque le plan de section est perpendiculaire à la longueur du tissu et aux faces principales, il donne une section telle que la différence, en valeur absolue, entre d'une part la largeur de l'ensemble renforçant et d'autre part l'une des largeurs maximum ou minimum de la section, soit au moins égale à l'épaisseur maximum de la nappe.

29. Nappe selon l'une quelconque des revendications 1 à 28, caractérisée en ce qu'elle constitue au moins en partie une armature de sommet d'une enveloppe de pneumatique.

30. Nappe selon l'une quelconque des revendications 1 à 29, caractérisée en ce qu'elle est imprégnée d'au moins une matière entrant dans la constitution de l'article où elle est destinée à être utilisée.

31. Article comportant au moins une nappe de renfort conforme à l'une quelconque des revendications 1 à 30.

32. Article selon la revendication 31, caractérisé en ce qu'il est une enveloppe de pneumatique, la nappe constituant au moins en partie une armature de sommet de cette enveloppe.

33. Enveloppe de pneumatique comportant au moins une nappe de renfort conforme à l'une quelconque des revendications 1 à 30, caractérisée en ce que le corps (18) de la nappe (7, 8; 32; 40; 50; 61; 71) comporte des fils de chaîne (19) et des fils de trame (20) et en ce que, au voisinage du plan équatorial de l'enveloppe (1, 31, 60, 70), les fils de chaîne du corps sont pratiquement disposés dans des plans parallèles au plan équatorial, les fils de trame du corps et les fils de renfort (9) de la nappe étant pratiquement disposés dans des cylindres de révolution dont l'axe est l'axe de révolution de l'enveloppe.

34. Enveloppe de pneumatique selon l'une quelconque des revendications 32 ou 33, caractérisée en ce qu'au moins une face principale de la nappe constitue une partie d'une face du sommet, ou se trouve située à une distance de cette face au plus égale au cinquième de l'épaisseur du sommet, en ce que les fils de renfort de la nappe constituent au moins un ensemble renforçant pratiquement disposé sur une surface, et en ce que, dans un plan radial, la droite passant par une extrémité de cet ensemble et perpendiculaire à cette surface de fils de renfort coupe cette face du sommet en un point tel que la distance de ce point à l'extrémité M de cette face principale soit au moins égale à la moitié de l'épaisseur maximum de la nappe, cette extrémité M étant située du même côté que ce point par rapport au plan équatorial de l'enveloppe.

35. Procédé consistant à fabriquer une enveloppe de pneumatique (1, 31, 60, 70) avec un moule de coulée (21) ou un tambour de confection, caractérisé en ce qu'on dispose au moins une nappe de renfort (7, 8; 32; 40; 50; 61; 71) conforme à l'une quelconque des revendications 1 à 30 de telle sorte qu'au moins une face principale (14, 15; 62, 63; 72, 73) de la nappe soit au contact de ce moule (21) ou de ce tambour, soit directement, soit par l'intermédiaire d'une mince couche de gomme, les fils de renfort (9) de cette nappe étant dépourvus de contact avec cette face principale.

**Patentansprüche**

1. Verstärkungseinlage (7, 8, 32, 40, 50, 61, 71) dazu bestimmt in einem Gegenstand (1, 31, 60, 70) verwendet zu werden, wobei diese Einlage zumindest zum Teil aus einem Gewebe (13) besteht, welches die folgenden Eigenschaften aufweist:

a) es weist einen dreidimensionalen Körper (18) auf, in dem Verstärkungsfäden (9) angeordnet und von ihm gehalten sind;

b) praktisch alle Hohlräume (29) des Gewebes (13) sind in der Lage von zumindest einem Material (28), welches bei der Herstellung des Gegenstands (1, 31, 60, 70) verwendet wird, erfüllt zu werden;

c) das Gewebe (13) weist zwei Hauptseiten (14, 15, 62, 63, 72, 73) auf, die von zwei seitlichen Seiten (16, 17, 64) verbunden werden;

d) wenn das Gewebe (13) so angeordnet wird, dass es eine im wesentlichen ebene Form aufweist, sind die Hauptseiten (14, 15, 62, 63, 72, 73) praktisch eben und parallel;

e) jede Ebene, die die Hauptseiten und die seitlichen Seiten des Gewebes schneidet, bildet einen Schnitt ($S_{13}$, $S_{61}$, $S_{71}$) dessen Breite ($L_{13}$, $L_{14}$) gemessen parallel zu den Hauptseiten, von einer Hauptseite zur anderen variiert.

2. Einlage nach Anspruch 1, dadurch gekennzeichnet, dass die Verstärkungsfäden untereinander von Fäden des Körpers so getrennt sind, dass die Verstärkungsfäden keinerlei Kontakt untereinander haben und dass diese Verstärkungsfäden mit zumindest einer Hauptseite keinen Kontakt haben.

3. Einlage nach einem der Ansprüche 1 oder 2, dadurch gekennzeichnet, dass sie eine Zentralregion und zwei seitliche Bereiche aufweist, wobei die Dicke der Einlage in der Zentralregion grösser ist als in den seitlichen Bereichen, wobei diese Dicken entlang Geraden gemessen werden, die rechtwinkelig auf jede Ebene steht, die parallel zu den Hauptseiten ist, wenn das Gewebe so angeordnet ist, dass es eine im wesentlichen ebene Form aufweist.

4. Einlage nach einem der Ansprüche 1 bis 3, dadurch gekennzeichnet, dass der Körper Kettfäden aufweist, von denen jeder praktisch in einer «Kettebene» genannten Ebene so gewellt ist, dass er abwechselnd eine Seite und anschliessend eine andere tangiert.

5. Einlage nach Anspruch 4, dadurch gekennzeichnet, dass die Kettebenen untereinander und zu jeder auf die Hauptseiten rechtwinkelig und zur Längsrichtung der Einlage parallelen Ebene parallel sind.

6. Einlage nach einem der Ansprüche 1 bis 5, dadurch gekennzeichnet, dass der Körper Schussfäden und Kettfäden aufweist, wobei die Schussfäden zwischen den Kettfäden angeordnet sind und jeder Schussfaden praktisch in einer Schussebene genannten Ebene so gewellt ist, dass er abwechselnd eine seitliche Seite und dann die andere tangiert, wenn das Gewebe so angeordnet ist, dass es eine im wesentlichen ebene Form aufweist.

7. Einlage nach Anspruch 6, dadurch gekennzeichnet, dass die Schussebenen untereinander parallel und rechtwinkelig auf die Hauptseiten sind.

8. Einlage nach einem der Ansprüche 6 oder 7 verbunden mit Anspruch 3, dadurch gekennzeichnet, dass zumindest in der zentralen Region die Schussfäden praktisch in mehreren Flächen angeordnet sind.

9. Einlage nach Anspruch 8, dadurch gekennzeichnet, dass die Schussfäden in der Zentralregion praktisch auf zumindest vier Flächen angeordnet sind.

10. Einlage nach einem der Ansprüche 8 oder 9, dadurch gekennzeichnet, dass diese Flächen Ebenen sind, die zu den Hauptseiten parallel sind.

11. Einlage nach einem der Ansprüche 1 bis 10, dadurch gekennzeichnet, dass zumindest eine seitliche Fläche ebene Elementarseiten aufweist, wenn das Gewebe so angeordnet ist, dass es eine im wesentlichen ebene Form aufweist.

12. Einlage nach einem der Ansprüche 1 bis 11, dadurch gekennzeichnet, dass zumindest eine seitliche Seite durchgehend ist, wenn das Gewebe so angeordnet ist, dass es eine im wesentlichen ebene Form aufweist.

13. Einlage nach einem der Ansprüche 1 bis 12, dadurch gekennzeichnet, dass die Verstärkungsfäden eine oder mehrere Orientierungen aufweisen, wenn das Gewebe so angeordnet ist, dass es eine im wesentlichen ebene Form aufweist.

14. Einlage nach Anspruch 13, dadurch gekennzeichnet, dass die Verstärkungsfäden praktisch in zumindest einer Ebene angeordnet sind und dass die Verstärkungsfäden dieser Ebene die gleiche Orientierung besitzen.

15. Einlage nach Anspruch 14 kombiniert mit Anspruch 10, dadurch gekennzeichnet, dass die Ebene oder die Ebenen der Verstärkungsfäden parallel zu den Ebenen ist, in denen die Schussfäden angeordnet sind.

16. Einlage nach einem der Ansprüche 1 bis 15, dadurch gekennzeichnet, dass das Gewebe Kettfäden und Schussfäden aufweist und dass die Verstärkungsfäden Kettfäden und/oder Schussfäden des Gewebes bilden.

17. Einlage nach einem der Ansprüche 1 bis 16, dadurch gekennzeichnet, dass die Verstärkungsfäden einerseits und die Fäden des Körpers andererseits aus verschiedenen Materialien bestehen.

18. Einlage nach einem der Ansprüche 1 bis 17, dadurch gekennzeichnet, dass die Querschnittsfläche der Fäden des Körpers kleiner ist als die Querschniffsfläche der Verstärkungsfäden.

19. Einlage nach Anspruch 18, dadurch gekennzeichnet, dass die Querschnittsfläche der Fäden des Körpers höchstens gleich ist einem Viertel der Fläche des Querschnitts der Verstärkungsfäden.

20. Einlage nach einem der Ansprüche 1 bis 19, dadurch gekennzeichnet, dass die Verstärkungsfäden aus einem aromatischen Polyamid bestehen.

21. Einlage nach einem der Ansprüche 1 bis 20, dadurch gekennzeichnet, dass der Körper zumindest zum Teil aus einem thermoplastischen Material besteht.

22. Einlage nach einem der Ansprüche 1 bis 21, dadurch gekennzeichnet, dass die Durchlässigkeit des Gewebes zumindest gleich $10^{-11} m^2 \cdot Pa^{-1} \cdot s^{-1}$ für ein Fluid ist, dessen Dichte gleich ist $1000$ kg/m³ und dessen dynamische Viskosität gleich ist 1 Pa·s.

23. Einlage nach Anspruch 22, dadurch gekennzeichnet, dass die Durchlässigkeit des Gewebes grösser ist als $500 \times 10^{-11} m^2 \cdot Pa^{-1} \cdot s^{-1}$.

24. Einlage nach einem der Ansprüche 1 bis 23, dadurch gekennzeichnet, dass die Porosität des Gewebes zumindest 50% ist.

25. Einlage nach Anspruch 24, dadurch gekennzeichnet, dass die Porosität des Gewebes zwischen 70 und 90% ist.

26. Einlage nach einem der Ansprüche 1 bis 25, dadurch gekennzeichnet, dass das Verhältnis zwischen der Steifigkeit des Gewebes, gemessen in jeder einzelnen Richtung der Verstärkungsfäden einerseits und der Steifigkeit des Körpers allein in der gleichen Richtung zumindest gleich 10 ist, wobei diese Messungen für eine Relativdehnung von 2% durchgeführt werden und das Gewebe für diese Messung nur die Verstärkungsfäden aufweist, in deren Richtung die Steifigkeit gemessen wird.

27. Einlage nach Anspruch 26, dadurch gekennzeichnet, dass das Verhältnis zumindest gleich 30 ist.

28. Einlage nach einem der Ansprüche 1 bis 27, dadurch gekennzeichnet, dass, wenn die Schnittebene rechtwinkelig auf die Längsrichtung des Gewebes und auf die Hauptseiten steht, sie einen Querschnitt ergibt, bei dem der Unterschied, gemessen in absoluten Grössen, zwischen der Breite des Verstärkungsensembles einerseits und den maximalen oder minimalen Breiten des Querschnitts andererseits zumindest gleich ist der maximalen Dicke der Einlage.

29. Einlage nach einem der Ansprüche 1 bis 28, dadurch gekennzeichnet, dass sie zumindest zum Teil die Scheitelbewehrung einer Luftreifenhülle bildet.

30. Einlage nach einem der Ansprüche 1 bis 29, dadurch gekennzeichnet, dass sie mit zumindest einem Material, welches bei der Herstellung des Gegenstandes in dem sie angebracht wird, verwendet wird, imprägniert wird.

31. Gegenstand mit zumindest einer Verstärkungseinlage gemäss einem der Ansprüche 1 bis 30.

32. Gegenstand nach Anspruch 31, dadurch gekennzeichnet, dass er eine Luftreifenhülle ist, wobei die Einlage zumindest einen Teil der Scheitelbewehrung dieser Hülle bildet.

33. Luftreifenhülle, die zumindest eine Einlage entsprechend einem der Ansprüche 1 bis 30 enthält, dadurch gekennzeichnet, dass der Körper (18) der Einlage (7, 8, 32, 40, 50, 61, 71) Kettfäden (19) und Schussfäden (20) aufweist und dass in Nachbarschaft der Äquatorialebene des Luftreifens (1, 31, 60, 70), die Kettfäden des Körpers praktisch in Ebenen angeordnet sind, die parallel zur Äquatorialebene verlaufen und dass die Schussfäden des Körpers und die Verstärkungsfäden (9) der Einlage praktisch auf Drehzylindern angeordnet sind, deren Achse die Drehachse des Reifens ist.

34. Luftreifen nach einem der Ansprüche 32 oder 33, dadurch gekennzeichnet, dass zumindest eine Hauptseite der Einlage einen Teil einer Seite des Scheitels bildet, oder sich in einem Abstand von dieser Seite, der nicht grösser ist als ein Fünftel der Scheiteldicke befindet, wobei die Verstärkungsfäden der Einlage zumindest ein Verstärkungsensemble bilden, welches praktisch auf einer Oberfläche angeordnet ist und dass in einem Radialschnitt, die Gerade, die durch ein Ende dieses Ensembles und rechtwinkelig auf dieser Oberfläche der Verstärkungsfäden geht, die Scheitelfläche in einem Punkt so schneidet, dass der Abstand dieses Punktes zum Ende M dieser Hauptseite zumindest gleich ist der Hälfte der maximalen Dicke der Einlage, wobei das Ende M auf der gleichen Seite, wie der Punkt, bezüglich der Äquatorialebene des Reifens liegt.

35. Verfahren zur Herstellung einer Luftreifenhülle (1, 31, 60, 70) mit einer Giessform (21) oder einer Konfektioniertrommel, dadurch gekennzeichnet, dass man zumindest eine Verstärkungseinlage (7, 8, 32, 40, 50, 61, 71), die einem der Ansprüche 1 bis 30 entspricht, so anbringt, dass zumindest eine Hauptseite (14, 15, 62, 63, 72, 73) der Einlage in Kontakt mit der Form (21) oder der Trommel, entweder direkt oder indirekt durch eine dünne Gummischicht ist, wobei die Verstärkungsfäden (9) dieser Einlage keinen Kontakt mit dieser Hauptseite aufweisen.

## Claims

1. Reinforcement ply (7, 8; 32; 40; 50; 61; 71) intended to be used in an article (1, 31, 60, 70), the said ply being constituted at least in part by a fabric (13), the properties of which are as follows:

a) it comprises a three-dimensional body (18) and reinforcement threads (9) arranged in this body (18) and held by this body;

b) practically all the spaces (29) of the fabric (13) are capable of being filled by at least one material (28) entering into the constitution of the article (1, 31, 60, 70);

c) the fabric (13) comprises two principal faces (14, 15; 62, 63; 72, 73) joined by two lateral faces (16, 17; 64);

d) when the fabric (13) is arranged so as to have a general flat shape, the principal faces (14, 15; 62, 63; 72, 73) are practically flat and parallel;

e) every plane sectionalizing the principal and lateral faces of the fabric forms a section ($S_{13}$; $S_{61}$; $S_{71}$), the width ($L_{13}$; $L_{14}$) of which, measured parallel to the principal faces, varies from one principal face to the other.

2. Ply according to Claim 1, characterized in that the reinforcement threads are separated from each other by threads of the body, such that these reinforcement threads are without contact with each other, and in that these reinforcement threads are without contact with at least one principal face.

3. Ply according to any one of Claims 1 or 2, characterized in that it comprises one central region and two lateral regions, the thickness of the ply in the central region being greater than the thickness of the ply in the lateral regions, these thicknesses being measured according to straight lines perpendicular to any plane which is parallel to the principal faces when the fabric is arranged so as to have a general flat shape.

4. Ply according to any one of Claims 1 to 3, characterized in that the body comprises warp threads, each of these warp threads undulating practically in a plane termed the "warp plane", being alternately tangent to one face then to another.

5. Ply according to Claim 4, characterized in that the warp planes are parallel to each other and parallel to any plane which is perpendicular to the principal faces and parallel to the length of the ply.

6. Ply according to any one of Claims 1 to 5, characterized in that the body comprises weft threads and warp threads, and in that weft threads are arranged between the warp threads, each weft thread undulating practically in a plane termed the "weft plane", being alternately tangent to one lateral face then to the other when the fabric is arranged so as to have a general flat shape.

7. Ply according to Claim 6, characterized in that the weft planes are parallel to each other and perpendicular to the principal faces.

8. Ply according to any one of Claims 6 or 7, combined with Claim 3, characterized in that, at least in the central region, the weft threads are practically arranged on several surfaces.

9. Ply according to Claim 8, characterized in that in the central region the weft threads are practically arranged on at least four surfaces.

10. Ply according to any one of Claims 8 or 9, characterized in that these surfaces are planes parallel to the principal faces.

11. Ply according to any one of Claims 1 to 10, characterized in that at least one lateral face comprises elementary flat faces when the fabric is arranged so as to have a general flat shape.

12. Ply according to any one of Claims 1 to 11, characterized in that at least one lateral face is continuous when the fabric is arranged so as to have a general flat shape.

13. Ply according to any one of Claims 1 to 12, characterized in that the reinforcement threads have one or more orientations, when the fabric is arranged so as to have a general flat shape.

14. Ply according to Claim 13, characterized in that the reinforcement threads are practically arranged in at least one plane, the reinforcement threads of this plane having the same orientation.

15. Ply according to Claim 14, combined with Claim 10, characterized in that the plane or planes of reinforcement threads are parallel to the planes in which the weft threads are arranged.

16. Ply according to any one of Claims 1 to 15, characterized in that the fabric comprises warp threads and weft threads and in that the reinforcement threads constitute warp threads and/or weft threads of the fabric.

17. Ply according to any one of Claims 1 to 16, characterized in that the reinforcement threads on the one hand, and the threads of the body on the other hand, are produced with different materials.

18. Ply according to any one of Claims 1 to 17, characterized in that the threads of the body have a cross-section, the surface of which has a smaller area than that of the surface of the cross-section of the reinforcement threads.

19. Ply according to Claim 18, characterized in that the threads of the body have a cross-section, the surface of which has an area at the most equal to a quarter of that of the surface of the cross-section of the reinforcement threads.

20. Ply according to any one of Claims 1 to 19, characterized in that the reinforcement threads are produced with an aromatic polyamide.

21. Ply according to any one of Claims 1 to 20, characterized in that the body is produced at least in part with a thermoplastic material.

22. Ply according to any one of Claims 1 to 21, characterized in that the permeability of the fabric is at least equal to $10^{-11} m^2 \cdot Pa^{-1} \cdot s^{-1}$ for a fluid, the volumic mass of which is equal to $1000 \, kg/m^3$

and the dynamic viscosity of which is equal to $1 \, Pa \cdot s$.

23. Ply according to Claim 22, characterized in that the permeability of the fabric is greater than $500 \times 10^{-11} m^2 \cdot Pa^{-1} \cdot s^{-1}$.

24. Ply according to any one of Claims 1 to 23, characterized in that the porosity of the fabric is at least equal to 50%.

25. Ply according to Claim 24, characterized in that the porosity of the fabric varies from 70% to 90%.

26. Ply according to any one of Claims 1 to 25, characterized in that the ratio between, on the one hand, the rigidity of the fabric measured according to each orientation of the reinforcement threads and, on the other hand, the rigidity of the body alone measured according to this orientation, is at least equal to 10, these measurements of rigidity being carried out for a relative elongation of 2%, the fabric being, for this measurement, without reinforcement threads of orientation other than that according to which the rigidity is measured.

27. Ply according to Claim 26, characterized in that this ratio is at least equal to 30.

28. Ply according to any one of Claims 1 to 27, characterized in that, when the section plane is perpendicular to the length of the fabric and to the principal faces, it gives a section such that the difference, in absolute value, between on the one hand the width of the reinforcing arrangement and on the other hand one of the maximum or minimum widths of the section, is at least equal to the maximum thickness of the ply.

29. Ply according to any one of Claims 1 to 28, characterized in that it constitutes at least in part a crown reinforcement of a pneumatic tyre.

30. Ply according to any one of Claims 1 to 29, characterized in that it is impregnated with at least one material entering into the constitution of the article where it is intended to be used.

31. Article comprising at least one reinforcement ply according to any one of Claims 1 to 30.

32. Article according to Claim 31, characterized in that it is a pneumatic tyre, the ply constituting at least in part a crown reinforcement of this pneumatic tyre.

33. Pneumatic tyre comprising at least one reinforcement ply according to any one of Claims 1 to 30, characterized in that the body (18) of the ply (7, 8; 32; 40; 50; 61; 71) comprises warp threads (19) and weft threads (20) and in that, in the vicinity of the equatorial plane of the tyre (1, 31, 60, 70), the warp threads of the body are practically arranged in planes parallel to the equatorial plane, the weft threads of the body and the reinforcement threads (9) of the ply being practically arranged in revolution cylinders, the axis of which is the axis of revolution of the pneumatic tyre.

34. Pneumatic tyre according to any one of Claims 32 or 33, characterized in that at least one principal face of the ply constitutes a part of a face of the crown, or is situated at a distance from this face at most equal to a fifth of the thickness of the crown, in that the reinforcement threads of the ply

constitute at least one reinforcing arrangement practically arranged on one surface, and in that, in a radical plane, the straight line passing through one end of this arrangement and perpendicular to this surface of reinforcement threads cuts this face of the crown at a point such that the distance from this point to the end M of this principal face is at least equal to half the maximum thickness of the ply, this end M being situated on the same side as this point in relation to the equatorial plane of the pneumatic tyre.

35. Process consisting of manufacturing a pneumatic tyre (1, 31, 60, 70), with a casting mould (21) or a manufacturing drum, characterized in that at least one reinforcement ply (7, 8; 32; 40; 50; 61; 71) according to any one of Claims 1 to 30 is arranged such that at least one principal face (14, 15; 62, 63; 72, 73) of the ply is in contact with this mould (21) or with this drum, either directly, or through a thin layer of rubber, the reinforcement threads (9) of this ply being without contact with this principal face.

**FIG.1**

**FIG.2**

19

FIG . 3

# FIG.4

## FIG. 5

## FIG. 6

FIG. 7

0 187 776

FIG. 8

27

## FIG. 9

## FIG. 10

FIG. 11

P$_{19}$  15  9  R$_C$  19  20  13  32  18  N$_{20}$

14

FIG. 12

P$_{19}$  15  20  19  R$_1$  9  13  32

16 B  18

FIG.13

FIG.14

FIG.15

0 187 776

FIG.16

FIG.17

FIG.18

35